(19)

Europäisches Patentamt
European Patent Office
Office européen des brevets

(11) **EP 4 428 757 A1**

(12) **EUROPEAN PATENT APPLICATION**

(43) Date of publication:
**11.09.2024 Bulletin 2024/37**

(21) Application number: **24159928.1**

(22) Date of filing: **27.02.2024**

(51) International Patent Classification (IPC):
**G06N 3/0495** (2023.01)      **G06N 3/0464** (2023.01)
**G06N 3/082** (2023.01)      **G06F 17/16** (2006.01)
**G06N 3/063** (2023.01)

(52) Cooperative Patent Classification (CPC):
**G06N 3/0495; G06F 17/16; G06N 3/0464;
G06N 3/082;** G06N 3/063

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.02.2023   GB 202302839
27.02.2023   GB 202302840
07.02.2024   GB 202401650**

(71) Applicant: **Imagination Technologies Limited
Kings Langley, Hertfordshire WD4 8LZ (GB)**

(72) Inventors:
• **Demirci, Gunduz Vehbi
Kings Langley, WD4 8LZ (GB)**
• **Dikici, Cagatay
Kings Langley, WD4 8LZ (GB)**

(74) Representative: **Slingsby Partners LLP
1 Kingsway
London WC2B 6AN (GB)**

(54) **COMPRESSING A NEURAL NETWORK**

(57)     A method of compressing a neural network, comprising: receiving a neural network; selecting two or more adjacent layers of the received neural network, each of said two or more adjacent layers having one or more input channels and one or more output channels, the one or more output channels of a first layer of the two or more adjacent layers corresponding to the one or more input channels of a second, subsequent, layer of the two or more adjacent layers, the first layer being arranged to perform a first operation and the second layer being arranged to perform a second operation; determining first and second matrices representative of sets of coefficients of the first and second layers of the received neural network, the first and second matrices comprising a plurality of elements representative of non-zero values and a plurality of elements representative of zero values, the one or more rows or columns of the first and second matrices being representative of the one or more output channels of the first and second layers and the one or more other of the rows or columns of the first and second matrices being representative of the one or more input channels of the first and second layer; forming an array comprising the first matrix (or a transposed first matrix) and the second matrix (or a transposed second matrix) by aligning the columns or rows of the first matrix (or transposed first matrix) that are representative of the one or more output channels of the first layer with the columns or rows of the second matrix (or transposed second matrix) that are representative of the one or more input channels of the second layer; rearranging the rows and/or columns of the array so as to: gather the plurality of elements representative of non-zero values comprised by the first matrix (or transposed first matrix) and the second matrix (or transposed second matrix) into respective first and second one or more sub-matrices, the first and second one or more sub-matrices having a greater number of elements representative of non-zero values per total number of elements of the first and second one or more sub-matrices than the number of elements representative of non-zero values per total number of elements of the first and second matrices, respectively; and outputting a compressed neural network comprising a first compressed layer arranged to perform a first compressed operation in dependence on the first one or more sub-matrices and a second, subsequent, compressed layer arranged to perform a second compressed operation in dependence on the second one or more sub-matrices.

FIGURE 13

**Description**

CROSS-REFERENCE TO RELATED APPLICATION

This application claims priority from UK patent application 2302839.2 filed on 27 February 2023, which is herein incorporated by reference in its entirety. This application also claims priority from UK patent application 2302840.0 filed on 27 February 2023, which is herein incorporated by reference in its entirety. This application also claims priority from UK patent application 2401650.3 filed on 7 February 2024, which is herein incorporated by reference in its entirety.

TECHNICAL FIELD

The present disclosure is directed to methods of, and processing systems for, compressing a neural network.

BACKGROUND

A neural network (NN) is a form of artificial network comprising a plurality of interconnected layers (e.g. "layers") that can be used for machine learning applications. In particular, a neural network can be used to perform signal processing applications, including, but not limited to, image processing.

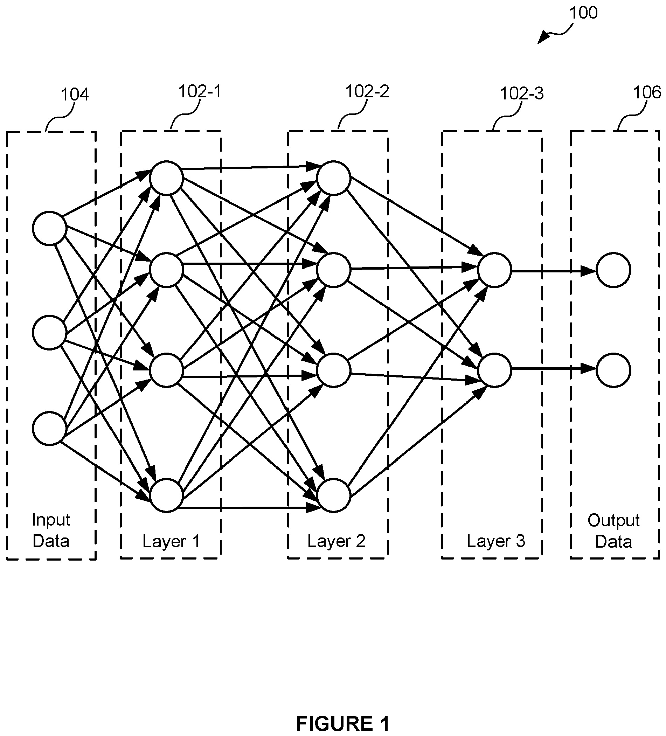

Figure 1 illustrates an example neural network 100 that comprises a plurality of adjacent layers 102-1, 102-2, 102-3. Each layer 102-1, 102-2, 102-3 receives a set of input activation values. The set of input activation values received by a layer may be referred to as input activation data of that layer. Each layer 102-1, 102-2, 102-3 processes its respective received input activation data by performing an operation in accordance with that layer to produce output data. The output data is either provided to a subsequent layer as the input activation data of that layer (e.g. the output data is "output activation data") or is output as the final output data of the neural network. For example, in the neural network 100, the first layer 102-1 receives the input activation data 104 originally input to the neural network 100 and processes that input activation data by performing a first operation in accordance with the first layer 102-1 to produce output activation data. The output activation data of the first layer 102-1 becomes the input activation data to the second, subsequent, layer 102-2 which processes that input activation data by performing a second operation in accordance with the second layer 102-2 to produce output activation data. The output activation data of the second layer 102-2 becomes the input activation data to the third, subsequent, layer 102-3 which processes that input activation data by performing a third operation in accordance with the third layer 102-3 to produce output data. The output data of the third layer 102-3 is output as the output data 106 of the neural network.

Each layer of a neural network may be one of a plurality of different types. The type of operation that is performed on the input activation data of a layer depends on the type of layer. Fully connected layers (sometimes referred to as dense layers or linear layers) and convolution layers are example types of neural network layer. It will be evident to a person of skill in the art that this is not an exhaustive list of example neural network layer types.

In a fully-connected layer, a fully connected operation is performed by performing matrix multiplication between a coefficient matrix comprising a set of coefficients of that fully-connected layer and an input matrix comprising a set of input activation values received by that fully-connected layer. The purpose of a fully-connected layer is to cause a dimensional change between the activation data input to that layer and the data output from that layer. A coefficient matrix comprising the set of coefficients of that fully-connected layer may have dimensions $C_{out} \times C_{in}$. That is, the number of rows of the matrix may be representative of the number of output channels ("$C_{out}$") of that fully-connected layer and the number of columns of the matrix may be representative of the number of input channels ("$C_{in}$") of that fully-connected layer. In a fully connected layer, a matrix multiplication $WX = Y$ can be performed where: $W$ is the coefficient matrix comprising a set of coefficients and having dimensions $C_{out} \times C_{in}$; $X$ is the input matrix comprising a set of input activation values and having dimensions $M \times N$, where $C_{in}$ = M; and $Y$ is an output matrix comprising a set of output values and having dimensions $C_{out} \times N$. Alternatively, a coefficient matrix comprising the set of coefficients of that fully-connected layer may have dimensions $C_{in} \times C_{out}$. That is, the number of rows of the matrix may be representative of the number of input channels ("$C_{in}$") of that fully-connected layer and the number of columns of the matrix may be representative of the number of output channels ("$C_{out}$") of that fully-connected layer. In this alternative, in a fully connected layer, a matrix multiplication $XW = Y$ can be performed where: $X$ is the input matrix comprising a set of input activation values and having dimensions M $\times$ N; $W$ is the coefficient matrix comprising a set of coefficients and having dimensions $C_{in} \times C_{out}$ where $C_{in}$ = N; and $Y$ is an output matrix comprising a set of output values and having dimensions $M \times C_{out}$. A matrix multiplication involves performing a number of element-wise multiplications between coefficients of the coefficient matrix and activation values of the input matrix. The results of said element-wise multiplications can be summed (e.g. accumulated) so as to form the output data values of the output matrix.

It will be evident to a person of skill in the art that other types of neural network layer also perform matrix multiplication using a coefficient matrix comprising a set of coefficients.

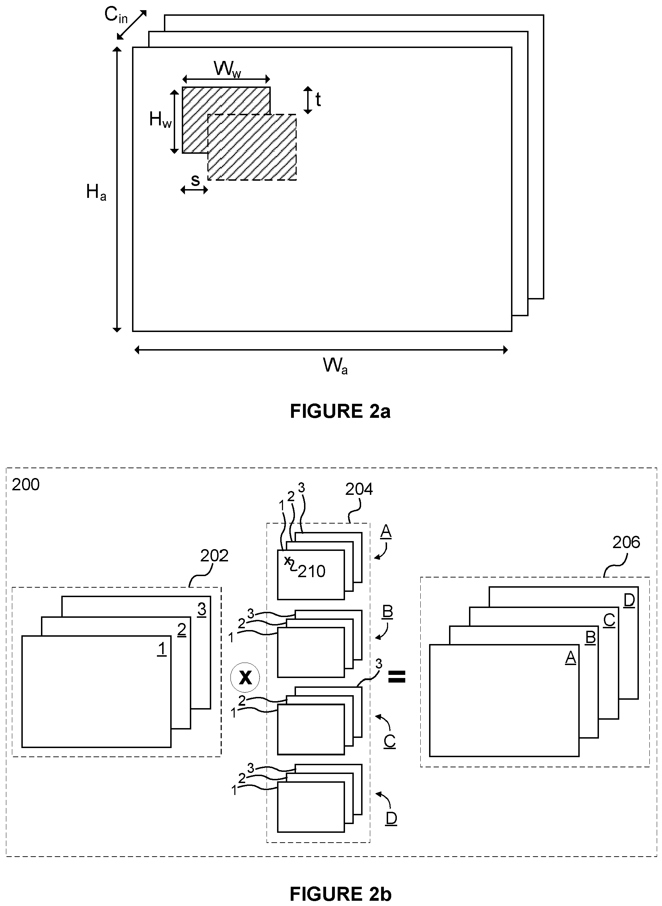

In a convolution layer, a convolution operation is performed using a set of input activation values received by that convolution layer and a set of coefficients of that convolution layer. Figure 2a shows the data structure used in an example convolution layer. In Figure 2a, the input activation data of a convolution layer may have the dimensions $C_{in} \times H_a \times W_a$. In other words, the input activation data may be arranged as $C_{in}$ input channels, where each input channel has a spatial dimension $H_a \times W_a$ - where $H_a$ and $W_a$ are, respectively, height and width dimensions. In Figure 2a, the input activation data is shown comprising three input channels (i.e. $C_{in}$ = 3). The set of coefficients of a convolution layer can be arranged in one or more input channels and one or more output channels. An output channel may alternatively be referred to as a filter. In Figure 2a, the set of coefficients have dimensions $C_{out} \times C_{in} \times H_w \times W_w$. The number of input channels in the set of coefficients of a convolution layer corresponds to (e.g. is equal to) the number of input channels in the input activation data with which that set of coefficients is to be convolved (e.g. in the example shown in Figure 2a, $C_{in}$ = 3). Each input channel of each filter of the set of coefficients input to a convolution layer has a spatial dimension $H_w \times W_w$ - where $H_w$ and $W_w$ are, respectively, height and width dimensions. Each input channel of each filter comprises a respective subset of the set of coefficients of the convolution layer. Each coefficient is included in (e.g. comprised by, or part of) one input channel and one filter. The $C_{out}$ dimension (e.g. number of output channels, or the number of filters) is not shown in Figure 2a - but denotes the number of channels that will be generated in the output data by performing a convolution operation using the set of coefficients.

Figure 2b schematically illustrates an example convolution layer 200. In Figure 2b, convolution layer 200 is arranged to perform a convolution operation using input activation data 202 and set of coefficients 204. In Figure 2b, activation data 202 input to layer 200 is arranged in three input channels 1, 2, 3. The number of input channels in the set of coefficients 204 corresponds to (e.g. is equal to) the number of input channels in the activation data 202 with which that set of coefficients 204 is to be convolved. Hence, the set of coefficients 204 is arranged in three input channels 1, 2, 3. The set of coefficients 204 is also arranged in four filters (e.g. output channels) A, B, C, D. The number of filters in the set of coefficients 204 corresponds to (e.g. is equal to) the number of channels in output data 206. Each coefficient is included in (e.g. comprised by, or part of) one input channel and one filter. For example, coefficient 210 is included in input channel 1 and filter A.

In convolution layer 200, the input activation data 202 is convolved with the set of coefficients 204 so as to generate output data 206 having four data channels A, B, C, D. More specifically, the first input channel of the input activation data 202 is convolved with the first input channel of each filter in the set of coefficients 204. For example, returning to Figure 2a, the first input channel of the input activation data 202, having spatial dimensions $H_a \times W_a$, may be convolved with the first input channel of each filter in the set of coefficients 204, having spatial dimensions $H_w \times W_w$, across a number of steps in direction $s$ and $t$. Returning to Figure 2b, in an analogous way, the second input channel of the input activation data 202 is convolved with the second input channel of each filter in the set of coefficients 204, and the third input channel of the input activation data 202 is convolved with the third input channel of each filter in the set of coefficients 204. Convolving each input channel of the input activation data with each input channel of each filter involves performing a number of element-wise multiplications between the activation values of each input channel of the input activation data and the coefficients of each input channel of each filter. The results of said element-wise multiplications can be summed (e.g. accumulated) so as to form the output data values for each channel of output data 206.

The sets of coefficients used by the layers of a typical neural network often comprise large numbers of coefficients. When implementing a neural network at a neural network accelerator, the sets of coefficients are typically stored in an "off-chip" memory. The neural network accelerator can implement a layer of the neural network by reading in the set of coefficients of that layer at run-time. A large amount of memory bandwidth can be required in order to read in a large set of coefficients from an off-chip memory. The memory bandwidth required to read in a set of coefficients can be termed the "weight bandwidth". It is desirable to decrease the weight bandwidth required to implement a neural network at a neural network accelerator.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect of the present invention there is provided a computer implemented method of compressing a neural network, the method comprising: receiving a neural network; selecting two or more adjacent layers of the received neural network, each of said two or more adjacent layers having one or more input channels and one or more output channels, the one or more output channels of a first layer of the two or more adjacent layers corresponding to the one or more input channels of a second, subsequent, layer of the two or more adjacent layers, the first layer being arranged to perform a first operation and the second layer being arranged to perform a second operation; determining a first matrix representative of a set of coefficients of the first layer of the received neural network, the first matrix comprising a plurality of elements representative of non-zero values and a plurality of elements representative of zero values, the one or more rows or columns of the first matrix being representative of the one or more output channels of the first layer and the one or more other of the rows or columns of the first matrix being representative of the one or more input channels of the first layer; determining a second matrix representative of a set of coefficients of the second layer of the received neural network, the second matrix comprising a plurality of elements representative of non-zero values and a plurality of elements representative of zero values, the one or more rows or columns of the second matrix being representative of the one or more output channels of the second layer and the one or more other of the rows or columns of the second matrix being representative of the one or more input channels of the second layer; forming an array by, one of: transposing the first matrix and forming the array comprising the transposed first matrix and the second matrix by aligning the columns or rows of the transposed first matrix that are representative of the one or more output channels of the first layer with the columns or rows of the second matrix that are representative of the one or more input channels of the second layer; or transposing the second matrix and forming the array comprising the transposed second matrix and the first matrix by aligning the rows or columns of the transposed second matrix that are representative of the one or more input channels of the second layer with the rows or columns of the first matrix that are representative of the one or more output channels of the first layer; or forming the array comprising the first matrix and the second matrix by aligning the rows or columns of the first matrix that are representative of the one or more output channels of the first layer with the rows or columns of the second matrix that are representative of the one or more input channels of the second layer; rearranging the rows and/or columns of the array so as to: gather the plurality of elements representative of non-zero values comprised by the first matrix or the transposed first matrix into a first one or more sub-matrices, the first one or more sub-matrices having a greater number of elements representative of non-zero values per total number of elements of the first one or more sub-matrices than the number of elements representative of non-zero values per total number of elements of the first matrix; and gather the plurality of elements representative of non-zero values comprised by the second matrix or the transposed second matrix into a second one or more sub-matrices, the second one or more sub-matrices having a greater number of elements representative of non-zero values per total number of elements of the second one or more sub-matrices than the number of elements representative of non-zero values per total number of elements of the second matrix; and outputting a compressed neural network comprising a first compressed layer arranged to perform a first compressed operation in dependence on the first one or more sub-matrices and a second, subsequent, compressed layer arranged to perform a second compressed operation in dependence on the second one or more sub-matrices.

Each of the first one or more sub-matrices may have a greater number of elements representative of non-zero values per total number of elements of that first sub-matrix than the number of elements representative of non-zero values per total number of elements of the first matrix; and/or each of the second one or more sub-matrices may have a greater number of elements representative of non-zero values per total number of elements of that second sub-matrix than the number of elements representative of non-zero values per total number of elements of the second matrix.

The first matrix may comprise the set of coefficients of the first layer, the plurality of elements representative of non-zero values may be a plurality of non-zero coefficients, the plurality of elements representative of zero values may be a plurality of zero coefficients, and the one or more first sub-matrices may comprise a subset of the set of coefficients of the first layer; and/or the second matrix may comprise the set of coefficients of the second layer, the plurality of elements representative of non-zero values may be a plurality of non-zero coefficients, the plurality of elements representative of zero values may be a plurality of zero coefficients, and the one or more second sub-matrices may comprise a subset of the set of coefficients of the second layer.

The first layer of the received neural network may be arranged to perform the first operation by performing a matrix multiplication using the first matrix comprising the set of coefficients of the first layer and a first input matrix comprising a set of input activation values of the first layer, and the compressed neural network may be configured such that the first compressed layer is arranged to perform the first compressed operation by performing one or more matrix multiplications using the one or more subsets of the set of coefficients of the first layer comprised by the first one or more sub-matrices and one or more first input sub-matrices each comprising a respective subset of the set of input activation values of the first layer; and/or the second layer of the received neural network may be arranged to perform the second operation by performing a matrix multiplication using the second matrix comprising the set of coefficients of the second layer and a second input matrix comprising a set of input activation values of the second layer, and the compressed neural network may be configured such that the second compressed layer is arranged to perform the second compressed operation by performing one or more matrix multiplications using the one or more subsets of the set of coefficients of the second layer comprised by the second one or more sub-matrices and one or more second input sub-matrices each comprising a respective subset of the set of input activation values of the second layer.

The first compressed layer may be arranged to perform the first compressed operation so as to form one or more first output sub-matrices each comprising a respective subset of output activation values of the first compressed layer, the one or more first output sub-matrices of the first compressed layer being the one or more second input sub-matrices.

The first layer of the received neural network may be a first convolution layer comprising a set of coefficients arranged in one or more filters, each of the one or more filters arranged in one or more input channels, each input channel of each filter comprising a respective subset of the set of coefficients of the first convolution layer, and determining the first matrix may comprise: for each input channel of each filter: determining whether that input channel of that filter comprises a non-zero coefficient; and in response to determining that that input channel of that filter comprises at least one non-zero coefficient, representing that input channel of that filter with an element representative of a non-zero value in the first matrix; or in response to determining that that input channel of that filter comprises exclusively zero coefficients, representing that input channel of that filter with an element representative of a zero value in the first matrix.

The first convolution layer of the received neural network may be arranged to perform the first operation by convolving a set of input activation values of the first convolution layer with the set of coefficients of the first convolution layer; the first one or more sub-matrices may comprise a plurality of elements representative of a subset of the input channels of the filters of the set of coefficients of the first convolution layer; and the compressed neural network may be configured such that the first compressed layer is arranged to perform the first compressed operation by convolving one or more subsets of input activation values of the first convolution layer with the subsets of the set of coefficients of the first convolution layer comprised by the one or more subsets of the input channels of the filters represented by elements in the first one or more sub-matrices.

The second layer of the received neural network may be a second convolution layer comprising a set of coefficients arranged in one or more filters, each of the one or more filters arranged in one or more input channels, each input channel of each filter comprising a respective subset of the set of coefficients of the second convolution layer, and determining the second matrix may comprise: for each input channel of each filter: determining whether that input channel of that filter comprises a non-zero coefficient; and in response to determining that that input channel of that filter comprises at least one non-zero coefficient, representing that input channel of that filter with an element representative of a non-zero value in the second matrix; or in response to determining that that input channel of that filter comprises exclusively zero coefficients, representing that input channel of that filter with an element representative of a zero value in the second matrix.

The second convolution layer of the received neural network may be arranged to perform the second operation by convolving a set of input activation values of the second convolution layer with the set of coefficients of the second convolution layer; the second one or more sub-matrices may comprise a plurality of elements representative of a subset of the input channels of the filters of the set of coefficients of the second convolution layer; and the compressed neural network may be configured such that the second compressed layer is arranged to perform the second compressed operation by convolving one or more subsets of input activation values of the second convolution layer with the subsets of the set of coefficients of the second convolution layer comprised by the one or more subsets of the input channels of the filters represented by elements in the one or more sub-matrices.

The first compressed layer may be arranged to perform the first compressed operation so as to form one or more subsets of output activation values of the first compressed layer, the one or more subsets of output activation values of the first compressed layer being the one or more subsets of input activation values of the second compressed layer.

The method may comprise rearranging the rows and/or columns of the array in dependence on a hypergraph model.

The method may comprise: forming a hypergraph model in dependence on the respective row and column position of each of the plurality of elements representative of non-zero values within the array; partitioning the hypergraph model; rearranging the rows and/or columns of the array in dependence on the partitioned hypergraph model.

The method may further comprise: selecting a third layer of the received neural network, the third layer being arranged to perform a third operation, the third layer being subsequent to and adjacent to the second layer within the received neural network, the third layer having one or more input channels corresponding to the one or more output channels of the second layer; determining a third matrix representative of a set of coefficients of the third layer, the third matrix comprising a plurality of elements representative of non-zero values and a plurality of elements representative of zero values, the one or more rows or columns of the third matrix being representative of the one or more output channels of the third layer and the one or more other of the rows or columns of the first matrix being representative of the one or more input channels of the third layer; wherein forming the array further comprises, either: transposing the third matrix and forming the array comprising the transposed third matrix by aligning the columns or rows of the transposed third matrix that are representative of the one or more input channels of the third layer with the columns or rows of the second matrix or transposed second matrix that are representative of the one or more output channels of the second layer; or forming the array comprising the third matrix by aligning the columns or rows of the third matrix that are representative of the one or more input channels of the third layer with the columns or rows of the second matrix or transposed second matrix that are representative of the one or more output channels of the second layer; wherein rearranging the rows and/or columns of the array further comprises: gathering the plurality of elements representative of non-zero values comprised by the third matrix or the transposed third matrix into a third one or more sub-matrices, the third one or more sub-matrices having a greater number of elements representative of non-zero values per total number of elements of the third one or more sub-matrices than the number of elements representative of non-zero values per total number of elements of the third matrix; and outputting the compressed neural network further comprising a third compressed layer arranged to perform a third compressed operation in dependence on the third one or more sub-matrices.

The method may further comprise: selecting a first interspersed layer of the received neural network, the first interspersed layer being arranged to perform a first interspersed operation, the first interspersed layer being subsequent to and adjacent to the second layer within the received neural network, the first interspersed layer having one or more input channels corresponding to the one or more output channels of the second layer; determining a first interspersed matrix representative of a set of coefficients of the first interspersed layer, the one or more columns or rows of the first interspersed matrix being representative of the one or more input channels of the first interspersed layer; determining, from the rearranged array, a rearranged second matrix by, either identifying the rearranged second matrix within the rearranged array; or identifying the rearranged transposed second matrix within the rearranged array and transposing the rearranged transposed second matrix; rearranging the columns or rows of the first interspersed matrix such that one or more columns or rows of the first interspersed matrix being representative of the one or more input channels of the first interspersed layer are in an order that corresponds with the order of the one or more rows or columns of the rearranged second matrix being representative of the one or more output channels of the second layer; and outputting the compressed neural network comprising a first interspersed layer arranged to perform the first interspersed operation in dependence on the rearranged first interspersed matrix.

The first interspersed matrix may comprise a plurality of elements representative of non-zero values and a plurality of elements representative of zero values; and the method comprises selecting the first interspersed layer of the received neural network in dependence on the number of elements representative of non-zero values per total number of elements of the first interspersed matrix exceeding a threshold.

The method may comprise: selecting a second interspersed layer of the received neural network, the second interspersed layer being arranged to perform a second interspersed operation, the second interspersed layer being prior to and adjacent to the first layer within the received neural network, the second interspersed layer having one or more output channels corresponding to the one or more input channels of the first layer; determining a second interspersed matrix representative of a set of coefficients of the second interspersed layer, the one or more rows or columns of the second interspersed matrix being representative of the one or more output channels of the second interspersed layer; determining, from the rearranged array, a rearranged first matrix by, either identifying the rearranged first matrix within the rearranged array; or identifying the rearranged transposed first matrix within the rearranged array and transposing the rearranged transposed first matrix; rearranging the rows or columns of the second interspersed matrix such that one or more rows or columns of the second interspersed matrix being representative of the one or more output channels of the second interspersed layer are in an order that corresponds with the order of the one or more columns or rows of the rearranged first matrix being representative of the one or more input channels of the first layer; and outputting the compressed neural network comprising a second interspersed layer arranged to perform the second interspersed operation in dependence on the rearranged second interspersed matrix.

The second interspersed matrix may comprise a plurality of elements representative of non-zero values and a plurality of elements representative of zero values; and the method may comprise selecting the second interspersed layer of the received neural network in dependence on the number of elements representative of non-zero values per total number of elements of the second interspersed matrix exceeding a threshold.

The method may further comprise storing the compressed neural network for subsequent implementation.

The method may further comprise outputting a computer readable description of the compressed neural network that, when implemented at a system for implementing a neural network, causes the compressed neural network to be executed.

The method may further comprise configuring hardware logic to implement the compressed neural network.

The hardware logic may comprise a neural network accelerator.

The method may comprise using the compressed neural network to perform image processing.

The one or more rows of the first matrix may be representative of the one or more output channels of the first layer, the one or more columns of the first matrix may be representative of the one or more input channels of the first layer, the one or more rows of the second matrix may be representative of the one or more output channels of the second layer, and the one or more columns of the second matrix may be representative of the one or more input channels of the second layer; or the one or more columns of the first matrix may be representative of the one or more output channels of the first layer, the one or more rows of the first matrix may be representative of the one or more input channels of the first layer, the one or more columns of the second matrix may be representative of the one or more output channels of the second layer, and the one or more rows of the second matrix may be representative of the one or more input channels of the second layer; or the one or more rows of the first matrix may be representative of the one or more output channels of the first layer, the one or more columns of the first matrix may be representative of the one or more input channels of the first layer, the one or more columns of the second matrix may be representative of the one or more output channels of the second layer, and the one or more rows of the second matrix may be representative of the one or more input channels of the second layer; or the one or more columns of the first matrix may be representative of the one or more output channels of the first layer, the one or more rows of the first matrix may be representative of the one or more input channels of the first layer, the one or more rows of the second matrix may be representative of the one or more output channels of the second layer, and the one or more columns of the second matrix may be representative of the one or more input channels of the second layer.

According to a second aspect of the present invention there is provided a processing system for compressing a neural network, the processing system comprising at least one processor configured to: receive a neural network; select two or more adjacent layers of the received neural network, each of said two or more adjacent layers having one or more input channels and one or more output channels, the one or more output channels of a first layer of the two or more adjacent layers corresponding to the one or more input channels of a second, subsequent, layer of the two or more adjacent layers, the first layer being arranged to perform a first operation and the second layer being arranged to perform a second operation; determine a first matrix representative of a set of coefficients of the first layer of the received neural network, the first matrix comprising a plurality of elements representative of non-zero values and a plurality of elements representative of zero values, the one or more rows or columns of the first matrix being representative of the one or more output channels of the first layer and the one or more other of the rows or columns of the first matrix being representative of the one or more input channels of the first layer; determine a second matrix representative of a set of coefficients of the second layer of the received neural network, the second matrix comprising a plurality of elements representative of non-zero values and a plurality of elements representative of zero values, the one or more rows or columns of the second matrix being representative of the one or more output channels of the second layer and the one or more other of the rows or columns of the second matrix being representative of the one or more input channels of the second layer; form an array by, one of: transposing the first matrix and forming the array comprising the transposed first matrix and the second matrix by aligning the columns or rows of the transposed first matrix that are representative of the one or more output channels of the first layer with the columns or rows of the second matrix that are representative of the one or more input channels of the second layer; or transposing the second matrix and forming the array comprising the transposed second matrix and the first matrix by aligning the rows or columns of the transposed second matrix that are representative of the one or more input channels of the second layer with the rows or columns of the first matrix that are representative of the one or more output channels of the first layer; or forming the array comprising the first matrix and the second matrix by aligning the rows or columns of the first matrix that are representative of the one or more output channels of the first layer with the rows or columns of the second matrix that are representative of the one or more input channels of the second layer; rearrange the rows and/or columns of the array so as to: gather the plurality of elements representative of non-zero values comprised by the first matrix or the transposed first matrix into a first one or more sub-matrices, the first one or more sub-matrices having a greater number of elements representative of non-zero values per total number of elements of the first one or more sub-matrices than the number of elements representative of non-zero values per total number of elements of the first matrix; and gather the plurality of elements representative of non-zero values comprised by the second matrix or the transposed second matrix into a second one or more sub-matrices, the second one or more sub-matrices having a greater number of elements representative of non-zero values per total number of elements of the second one or more sub-matrices than the number of elements representative of non-zero values per total number of elements of the second matrix; and output a compressed neural network comprising a first compressed layer arranged to perform a first compressed operation in dependence on the first one or more sub-matrices and a second, subsequent, compressed layer arranged to perform a second compressed operation in dependence on the second one or more sub-matrices.

The processing system may further comprise a memory, and the at least one processor may be further configured to store the compressed neural network in the memory for subsequent implementation.

The at least one processor may be further configured to configure hardware logic to implement the compressed neural network.

The hardware logic may comprise a neural network accelerator.

According to a third aspect of the present invention there is provided a processing system for compressing a neural network, the processing system comprising at least one processor configured to: receive a neural network; determine a matrix representative of a set of coefficients of a layer of the received neural network, the layer being arranged to perform an operation, the matrix comprising a plurality of elements representative of non-zero values and a plurality of elements representative of zero values; rearrange the rows and/or columns of the matrix so as to gather the plurality of elements representative of non-zero values of the matrix into one or more sub-matrices, the one or more sub-matrices having a greater number of elements representative of non-zero values per total number of elements of the one or more sub-matrices than the number of elements representative of non-zero values per total number of elements of the matrix; and output a compressed neural network that comprises a compressed layer arranged to perform a compressed operation in dependence on the one or more sub-matrices.

According to a fourth aspect of the present invention there is provided a computer implemented method of compressing a neural network, the method comprising: receiving a neural network; determining a matrix representative of a set of coefficients of a layer of the received neural network, the layer being arranged to perform an operation, the matrix comprising a plurality of elements representative of non-zero values and a plurality of elements representative of zero values; rearranging the rows and/or columns of the matrix so as to gather the plurality of elements representative of non-zero values of the matrix into one or more sub-matrices, the one or more sub-matrices having a greater number of elements representative of non-zero values per total number of elements of the one or more sub-matrices than the number of elements representative of non-zero values per total number of elements of the matrix; and outputting a compressed neural network comprising a compressed layer arranged to perform a compressed operation in dependence on the one or more sub-matrices.

The processing system may be embodied in hardware on an integrated circuit. There may be provided a method of manufacturing, at an integrated circuit manufacturing system, a processing system. There may be provided an integrated circuit definition dataset that, when processed in an integrated circuit manufacturing system, configures the system to manufacture a processing system. There may be provided a non-transitory computer readable storage medium having stored thereon a computer readable description of a processing system that, when processed in an integrated circuit manufacturing system, causes the integrated circuit manufacturing system to manufacture an integrated circuit embodying a processing system.

There may be provided an integrated circuit manufacturing system comprising: a non-transitory computer readable storage medium having stored thereon a computer readable description of the processing system; a layout processing system configured to process the computer readable description so as to generate a circuit layout description of an integrated circuit embodying the processing system; and an integrated circuit generation system configured to manufacture the processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 shows an example neural network.
Figure 2a shows the data structure used in an example convolution layer.
Figure 2b shows an example convolution layer.
Figure 3 shows an example system for implementing a neural network.
Figure 4 shows a processing system for compressing a neural network.
Figure 5 shows a first method of compressing a neural network.
Figure 6 shows an example matrix comprising a plurality of elements representative of non-zero values and a plurality of elements representative of zero values.
Figure 7 shows an example rearranged matrix comprising a plurality of sub-matrices.
Figure 8 shows an example hypergraph model.
Figure 9 shows how a compressed operation can be performed using a plurality of sub-matrices.
Figure 10 shows how a compressed operation can be performed using a plurality of sub-matrices.
Figure 11 shows a second method of compressing a neural network.
Figure 12 shows an example array.
Figure 13 shows an example rearranged array.
Figure 14 shows, in an example, the output activation values formed by a first layer in dependence on a plurality of sub-matrices being used as the input activation values of a second, subsequent, layer.
Figure 15 shows, in an example, a rearranged matrix interspersed between rearranged matrices comprising a plurality of sub-matrices.
Figure 16a illustrates the $C_{out} \times C_{in}$ plane of a set of coefficients having dimensions $C_{out} \times C_{in} \times H_w \times W_w$.
Figure 16b illustrates how a compressed convolution operation can be performed using subsets of the set of coefficients of a convolution layer.
Figure 17 shows a computer system in which a processing system is implemented; and
Figure 18 shows an integrated circuit manufacturing system for generating an integrated circuit embodying a processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

Neural networks can be used to perform image processing. Examples of image processing techniques that can be performed by a neural network include: image super-resolution processing, semantic image segmentation processing and object detection. For example, performing image super-resolution processing involves a neural network processing a lower-resolution image input to the neural network in order to output a higher-resolution image. It will be appreciated that the principles described herein are not limited to use in compressing neural networks for performing image processing. For example, the principles described herein could be used in compressing neural networks for performing speech recognition/speech-to-text applications, or any other suitable types of applications. The skilled person would understand how to configure a neural network to perform any of the processing techniques mentioned in this paragraph, and so for conciseness these techniques will not be discussed in any further detail.

A neural network can be defined by a software model. For example, that software model may define the series of layers of the neural network (e.g. the number of layers, the order of the layers, and the connectivity between those layers), and define each of the layers in that series in terms of the operation it is configured to perform and the set of coefficients it will use. In general, a neural network may be implemented in hardware, software, or any combination thereof.

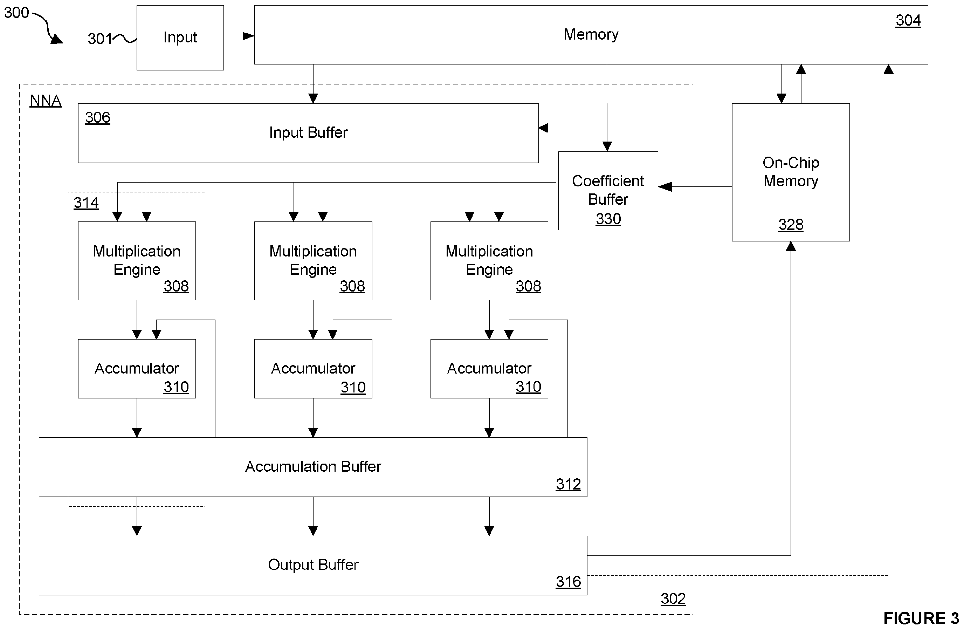

Figure 3 shows an example system 300 for implementing a neural network in hardware. System 300 comprises hardware components (e.g. hardware logic, such as processing elements implemented in hardware) and software components (e.g. firmware, and the procedures and tasks for execution at the hardware logic). System 300 comprises hardware logic for implementing a neural network. That hardware logic comprises a neural network accelerator (NNA) 302. Put another way, system 300 may comprise a hardware neural network accelerator (NNA). That is, system 300 may comprise a neural network accelerator (NNA) implemented in hardware. Neural network accelerator (NNA) 302 can be configured to execute the operations to be performed by the layers of a neural network. Neural network accelerator (NNA) 302 comprises a plurality of configurable resources that enable different types of neural network layer to be implemented, such as fully-connected layers and convolution layers. In other words, implementing a neural network may comprise configuring the hardware logic comprised by system 300 to process data input to that system in accordance with the layers of that neural network. A neural network accelerator (NNA) is a hardware accelerator that is designed to accelerate the processing of a neural network. As is known to those of skill in the art, a hardware accelerator is hardware designed to perform a specific set of one or more functions more efficiently than a general processing unit, such as a central processing unit (CPU). Accordingly, in contrast to a general CPU which can be configured to perform any number of functions, an accelerator can only perform a limited set of one or more functions. NNAs comprise one or more hardware accelerators designed to accelerate one or more neural network operations. Therefore a graphics processing unit (GPU) with one or more hardware accelerators designed to accelerate one or more neural network operations can be understood to be an NNA.

In further detail, system 300 comprises input 301 for receiving input data. The input data received at input 301 includes input activation data. For example, when the neural network being implemented is configured to perform image processing, the input activation data may include image data representing one or more images. For example, for an RGB image, the image data may be in the format $C_{in} \times H_a \times W_a$, where $H_a$ and $W_a$ are the pixel dimensions of the image across three input colour channels $C_{in}$ (i.e. R, G and B). The input data received at input 301 also includes the sets of coefficients of each layer of the neural network. The sets of coefficients may also be referred to as weights. As described herein, the set of coefficients of a fully-connected layer may have dimensions $C_{out} \times C_{in}$, or $C_{in} \times C_{out}$, whilst the set of coefficients of a convolution layer may have dimensions $C_{out} \times C_{in} \times H_w \times W_w$.

The input data received at input 301 may be written to a memory 304 comprised by system 300. Memory 304 may be accessible to the neural network accelerator (NNA) 302. Memory 304 may be a system memory accessible to the neural network accelerator (NNA) 302 over a data bus. Neural network accelerator (NNA) 302 may be implemented on a chip (e.g. semiconductor die and/or integrated circuit package) and memory 304 may not be physically located on the same chip (e.g. semiconductor die and/or integrated circuit package) as neural network accelerator (NNA) 302. As such, memory 304 may be referred to as "off-chip memory" and/or "external memory". Memory 304 may be coupled to an input buffer 306 at the neural network accelerator (NNA) 302 so as to provide input activation data to the neural network accelerator (NNA) 302. Memory 304 may be coupled to a coefficient buffer 330 at the neural network accelerator (NNA) 302 so as to provide sets of coefficients to the neural network accelerator (NNA) 302.

Input buffer 306 may be arranged to store input activation data required by the neural network accelerator (NNA) 302. Coefficient buffer 330 may be arranged to store sets of coefficients required by the neural network accelerator (NNA) 302. The input buffer 306 may include some or all of the input activation data relating to the one or more operations being performed at the neural network accelerator (NNA) 302 on a given cycle - as will be described herein. The coefficient buffer 330 may include some or all of the sets of coefficients relating to the one or more operations being processed at the neural network accelerator (NNA) 302 on a given cycle - as will be described herein. The various buffers of the neural network accelerator (NNA) 302 shown in Figure 3 may be implemented in any suitable manner - e.g. as any number of data stores which are local to the neural network accelerator (NNA) 302 (e.g. on the same semiconductor die and/or provided within the same integrated circuit package) or accessible to the neural network accelerator (NNA) 302 over a data bus or other interconnect.

In Figure 3, system 300 also comprises a memory 328 for storing at least some of the sets of coefficients and/or input activation data required by the neural network being implemented at the neural network accelerator (NNA) 302. Neural network accelerator (NNA) 302 may be implemented on a chip (e.g. semiconductor die and/or integrated circuit package) and memory 328 may be physically located on the same chip (e.g. semiconductor die and/or integrated circuit package) as neural network accelerator (NNA) 302. As such, memory 328 may be referred to as "on-chip memory" and/or "local memory". Data stored in the on-chip memory 328 may be accessed by the neural network accelerator (NNA) 302 without consuming memory bandwidth to the off-chip memory 304. That said, on-chip memory 328 may not have sufficient storage space so as to simultaneously store all of the input data required to implement a neural network. Thus, subsets of the input data may be periodically written into the on-chip memory 328 from off-chip memory 304. The coefficient buffer 330 may be configured to receive sets of coefficients from the on-chip memory 328 so as to reduce the bandwidth between the off-chip memory 304 and the coefficient buffer 330. The input buffer 306 may be configured to receive input activation data from the on-chip memory 328 so as to reduce the bandwidth between the off-chip memory 304 and the input buffer 306.

In Figure 3, neural network accelerator (NNA) 302 includes input buffer 306, coefficient buffer 330, a plurality of multiplication engines 308, a plurality of accumulators 310, an accumulation buffer 312, and an output buffer 316. Each multiplication engine 308, together with its respective accumulator 310 and its share of the resources of the accumulation buffer 312, represents a processing element 314 of the neural network accelerator (NNA) 302. Three processing elements 314 are shown in Figure 3 but in general there may be any number.

Each processing element 314 may receive a set of input activation values from input buffer 306 and a set of coefficients from a coefficient buffer 330. By operating on the sets of input activation values and the sets of coefficients, the processing elements are operable to perform the operations of the layers of a neural network. The processing elements 314 of neural network accelerator (NNA) 302 may be independent processing subsystems of the neural network accelerator (NNA) 302 which can operate in parallel. Each processing element 314 includes a multiplication engine 308 configured to perform multiplications between sets of coefficients and input activation values. In examples, a multiplication engine 308 may be configured to perform a fully connected operation (e.g. when implementing a fully connected layer) or a convolution operation (e.g. when implementing a convolution layer) between sets of coefficients and input activation values. A multiplication engine 308 can perform these operations by virtue of each multiplication engine 308 comprising a plurality of multipliers, each of which is configured to multiply a coefficient and a corresponding input activation value to produce a multiplication output value. The multipliers may be, for example, followed by an adder tree arranged to calculate the sum of the multiplication outputs in the manner prescribed by the operation to be performed by that layer. In some examples, these multiply-accumulate calculations may be pipelined.

As described herein, neural networks are typically described as comprising a number of layers. A large number of multiply-accumulate calculations must typically be performed at a neural network accelerator (NNA) 302 in order to execute the operation to be performed by each layer of a neural network. This is because the input activation data and set of coefficients of each layer are often very large. Since it may take more than one pass of a multiplication engine 308 to generate a complete output for an operation (e.g. because a multiplication engine 308 may only receive and process a portion of the set of coefficients and input activation values) the neural network accelerator (NNA) may comprise a plurality of accumulators 310. Each accumulator 310 receives the output of a multiplication engine 308 and adds that output to the previous output of the multiplication engine 308 that relates to the same operation. Depending on the implementation of the neural network accelerator (NNA) 302, a multiplication engine 308 may not process the same operation in consecutive cycles and an accumulation buffer 312 may therefore be provided to store partially accumulated outputs for a given operation. The appropriate partial result may be provided by the accumulation buffer 312 to the accumulator 310 at each cycle.

The accumulation buffer 312 may be coupled to an output buffer 316, to allow the output buffer 316 to receive output activation data of the intermediate layers of a neural network operating at the neural network accelerator (NNA) 302, as well as the output data of the final layer (e.g. the layer performing the final operation of a network implemented at the neural network accelerator (NNA) 302). The output buffer 316 may be coupled to on-chip memory 328 and/or off-chip memory 304, to which the output data (e.g. output activation data to be input to a subsequent layer as input activation data, or final output data to be output by the neural network) stored in the output buffer 316 can be written.

In general, a neural network accelerator (NNA) 302 may also comprise any other suitable processing logic. For instance, in some examples, neural network accelerator (NNA) 302 may comprise reduction logic (e.g. for implementing max-pooling or average-pooling operations), activation logic (e.g. for applying activation functions such as sigmoid functions or step functions), or any other suitable processing logic. Such units are not shown in Figure 3 for simplicity.

As described herein, the sets of coefficients used by the layers of a typical neural network often comprise large numbers of coefficients. A neural network accelerator, e.g. neural network accelerator 302, can implement a layer of the neural network by reading in the input activation values and set of coefficients of that layer at run-time - e.g. either directly from off-chip memory 304, or via on-chip memory 328, as described herein with reference to Figure 3. A large amount of memory bandwidth can be required in order to read in a large set of coefficients from memory. The memory bandwidth required to read in a set of coefficients can be termed the "weight bandwidth". The memory bandwidth required to read in a set of activation values can be termed the "activation bandwidth". Further, the time taken to read a large set of coefficients in from a memory can also affect the time taken for a neural network to execute the operation to be performed by that layer. This can affect the latency of the neural network. Large sets of coefficients can also place a large computational demand on the processing elements of the neural network accelerator implementing that neural network, such as processing elements 314 of neural network accelerator (NNA) 302 described herein. That is, a layer having a large set of coefficients may require those processing elements to perform a large number of multiply and accumulate operations.

What's more, the inventors have observed that, often, a large proportion of the coefficients of the sets of coefficients of the layers of a typical neural network are equal to zero (e.g. "zero coefficients" or "0s"). This is especially true in trained neural networks, as often the training process can drive a large proportion of the coefficients towards zero. Performing an element-wise multiplication between an input activation value and a zero coefficient will inevitably result in a zero output value - regardless of the value of the input activation value.

As such, it is undesirable to incur the weight bandwidth, latency and computational demand drawbacks incurred by the layers of a neural network using large sets of coefficients, only for a large proportion of the element-wise multiplications performed using the coefficients of those sets of coefficients to inevitably result in a zero output value. It is also undesirable to incur the activation bandwidth "cost" of reading an activation value in from memory, only for an element-wise multiplication performed using that activation value and a zero coefficient to inevitably result in a zero output value.

Described herein are methods of, and processing systems for, compressing a neural network in order to address one or more of the problems described in the preceding paragraphs.

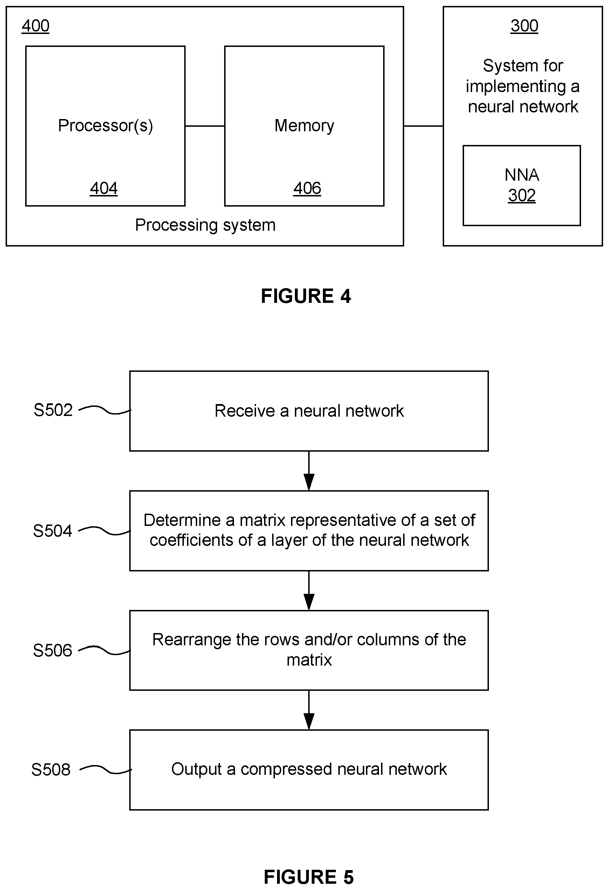

Figure 4 shows a processing system 400 for compressing a neural network in accordance with the principles described herein. Processing system 400 comprises at least one processor 404 and a memory 406.

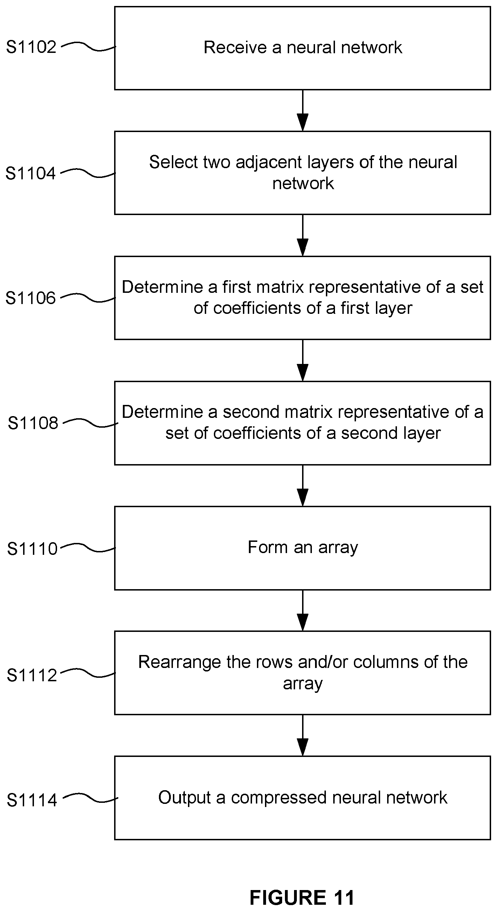

The at least one processor 404 may be implemented in hardware, software, or any combination thereof. The at least one processor 404 may be a microprocessor, a controller or any other suitable type of processor for processing computer executable instructions. The at least one processor 404 can be configured to perform a method of compressing a neural network in accordance with the principles described herein (e.g. one of the methods as will be described herein with reference to Figures 5 and 11).

Memory 406 is accessible to the at least one processor 404. Memory 406 may be a system memory accessible to the at least one processor 404 over a data bus. The at least one processor 404 may be implemented on a chip (e.g. semiconductor die and/or integrated circuit package) and memory 406 may not be physically located on the same chip (e.g. semiconductor die and/or integrated circuit package) as the at least one processor 404. As such, memory 406 may be referred to as "off-chip memory" and/or "external memory". Alternatively, the at least one processor 404 may be implemented on a chip (e.g. semiconductor die and/or integrated circuit package) and memory 406 may be physically located on the same chip (e.g. semiconductor die and/or integrated circuit package) as the at least one processor 404. As such, memory 406 may be referred to as "on-chip memory" and/or "local memory". Alternatively again, memory 406 shown in Figure 4 may represent any combination of "on-chip" and "off-chip" memories - e.g. one or more "on-chip" memories and one or more "off-chip" memories arranged in a memory hierarchy.

Memory 406 may store computer executable instructions for performing a method of compressing a neural network in accordance with the principles described herein (e.g. one of the methods as will be described herein with reference to Figures 5 and 11). Memory 406 may store a neural network received at the processing system 400 for compressing (e.g. a software model defining that neural network, as described herein). Memory 406 may store a compressed neural network output as a result of the at least one processor executing the computer executable instructions stored by the memory 406. Memory 406 may store that compressed neural network for subsequent implementation (e.g. at a system for implementing a neural network).

Processing system 400 can be used to configure a system 300 for implementing a neural network. The system 300 shown in Figure 4 may have the same properties as the system 300 described with reference to Figure 3. That is, system 300 may comprise hardware logic for implementing a neural network, said hardware logic comprising a neural network accelerator (NNA) 302. The at least one processor 404 may configure the hardware logic to implement a compressed neural network output as a result of the at least one processor performing a method of compressing a neural network in accordance with the principles described herein (e.g. one of the methods as will be described herein with reference to Figures 5 and 11).

Figure 5 shows a first method of compressing a neural network. The method of compressing a neural network shown in Figure 5 is a computer-implemented method. The processing system 400 for compressing a neural network shown in Figure 4 may be configured to perform the method of compressing a neural network shown in Figure 5.

In step S502, a neural network is received. The received neural network may be defined by a software model. For example, that software model may define the series of layers of the received neural network (e.g. the number of layers, the order of the layers, and the connectivity between those layers), and define each of the layers in that series in terms of the operation it is configured to perform and the set of coefficients it will use. The received neural network may be a trained neural network. That is, as would be understood by the skilled person, the received neural network may have previously been trained by iteratively: processing training data in a forward pass; assessing the accuracy of the output of that forward pass; and updating the sets of coefficients of the layers in a backward pass. As described herein, the training process can often drive a large proportion of the coefficients of the sets of coefficients used by the layers of a neural network towards zero. The neural network (e.g. the software model defining that neural network) may be received at processing system 400 shown in Figure 4, and stored in memory 406.

A layer of the received neural network can be selected for compression. In step S504, a matrix representative of a set of coefficients of the selected layer of the received neural network is determined. The matrix comprises a plurality of elements representative of non-zero values and a plurality of elements representative of zero values. The matrix representative of the set of coefficients of the selected layer of the received neural network may not have sub-graph separation. The at least one processor 404 shown in Figure 4 can be configured to perform step S504.

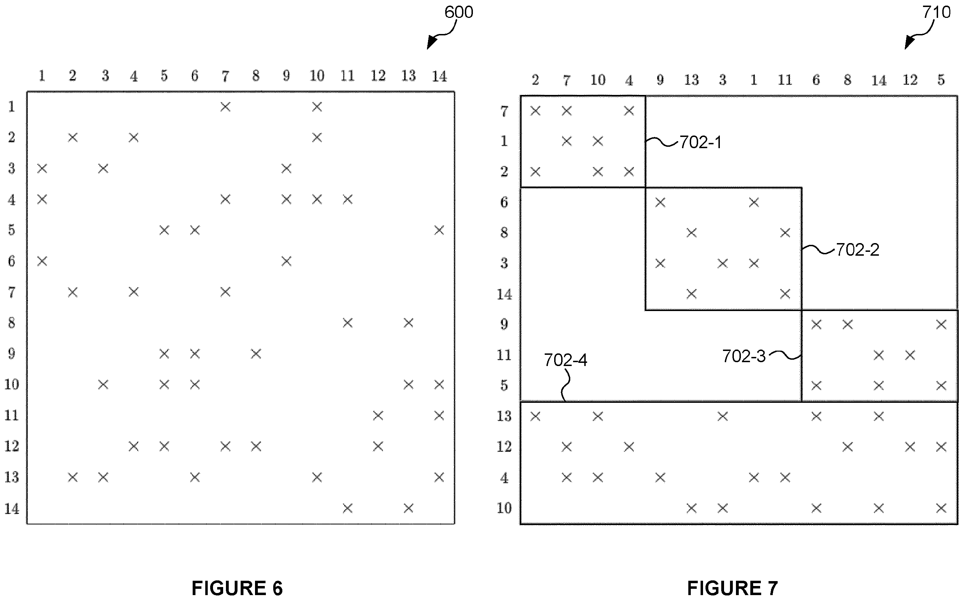

Figure 6 shows an example matrix 600 comprising a plurality of elements representative of non-zero values and a plurality of elements representative of zero values. In Figure 6, elements of the matrix 600 representative of non-zero values are marked with an "X", whilst elements of the matrix 600 representative of zero values are not marked. For example, the elements positioned in row 1, column 7 and row 1, column 10 of matrix 600 are representative of non-zero values, whilst the other elements positioned in row 1 of matrix 600 are representative of zero values. The example matrix 600 does not have sub-graph separation.

In a first example, the selected layer of the received neural network is a fully connected layer arranged to perform a fully connected operation, or any other type of layer arranged to perform matrix multiplication. In the first example, the determined matrix 600 may comprise the set of coefficients of the layer. The plurality of elements representative of non-zero values may be a plurality of non-zero coefficients. A non-zero coefficient is any coefficient that has a value, positive or negative, that is not equal to zero. The plurality of elements representative of zero values may be a plurality of zero coefficients. A zero coefficient is a coefficient that has a value that is equal to zero. Referring to Figure 6, in the first example, the matrix 600 comprises a plurality of non-zero coefficients marked with an "X", and a plurality zero coefficients that are not marked.

In the first example, the selected layer of the received neural network may be arranged to perform a fully connected operation by performing a matrix multiplication using the matrix 600 comprising the set of coefficients of the layer and an input matrix comprising a set of input activation values of the layer. For example, as described herein, in a fully connected layer, a matrix multiplication $WX = Y$ can be performed where: $W$ is the coefficient matrix (e.g. matrix 600) comprising a set of coefficients and having dimensions $C_{out} \times C_{in}$ (i.e. 14 × 14 in Figure 6); $X$ is the input matrix comprising a set of input activation values and having dimensions $M \times N$, where $C_{in} = M$; and $Y$ is an output matrix comprising a set of output values and having dimensions $C_{out} \times N$. That is, the number of rows of the coefficient matrix may be representative of the number of output channels ("$C_{out}$") of that fully-connected layer and the number of columns of the coefficient matrix may be representative of the number of input channels ("$C_{in}$") of that fully-connected layer. Alternatively, in a fully connected layer, a matrix multiplication $XW = Y$ can be performed where: $X$ is the input matrix comprising a set of input activation values and having dimensions $M \times N$; $W$ is the coefficient matrix (e.g. matrix 600) comprising a set of coefficients and having dimensions $C_{in} \times C_{out}$ (i.e. 14 × 14 in Figure 6), where $C_{in} = N$; and $Y$ is an output matrix comprising a set of output values and having dimensions $M \times C_{out}$. That is, the number of rows of the coefficient matrix may be representative of the number of input channels ("$C_{in}$") of that fully-connected layer and the number of columns of the coefficient matrix may be representative of the number of output channels ("$C_{out}$") of that fully-connected layer.

In a second example, the selected layer of the received neural network is a convolution layer. As described herein with reference to Figures 2a and 2b, a convolution layer comprises a set of coefficients arranged in one or more filters (e.g. filters A, B, C, D shown in Figure 2b), each of the one or more filters arranged in one or more input channels (e.g. input channels 1, 2, 3 shown in Figure 2b), each input channel of each filter comprising a respective subset of the set of coefficients of the convolution layer. That is, with reference to Figure 2b, input channel 1 of filter A comprises a subset of the set of coefficients 204 of the convolution layer 200, input channel 2 of filter A comprises a subset of the set of coefficients 204 of the convolution layer 200, input channel 3 of filter A comprises a subset of the set of coefficients 204 of the convolution layer 200, input channel 1 of filter B comprises a subset of the set of coefficients 204 of the convolution layer 200, input channel 2 of filter B comprises a subset of the set of coefficients 204 of the convolution layer 200, input channel 3 of filter B comprises a subset of the set of coefficients 204 of the convolution layer 200, and so on through to input channel 3 of filter D comprises a subset of the set of coefficients 204 of the convolution layer 200. Each input channel of each filter has dimensions $H_w \times W_w$, e.g. comprises $H_w \times W_w$ coefficients of the set of coefficients of the convolution layer.

In the second example, the selected convolution layer of the received neural network may be arranged to perform a convolution operation by convolving a set of input activation values of the convolution layer with the set of coefficients of the convolution layer, as will be understood with reference to the description herein of Figures 2a and 2b. That is, the $N^{th}$ input channel of the input activation data 202, having spatial dimensions $H_a \times W_a$, may be convolved with the $N^{th}$ input channel of each filter in the set of coefficients 204, having spatial dimensions $H_w \times W_w$.

In the second example, determining the matrix in step S504 comprises, for each input channel of each filter (e.g. referring to Figure 2b, for input channel 1 of filter A, for input channel 2 of filter A, and so on to for input channel 3 of filter D) determining whether that input channel of that filter comprises a non-zero coefficient. In response to determining that an input channel of a filter comprises at least one non-zero coefficient, that input channel of that filter can be represented with an element representative of a non-zero value in the matrix. In response to determining that an input channel of a filter comprises exclusively zero coefficients (i.e. does not comprise any non-zero coefficients within its subset of the set of coefficients of the convolution layer), that input channel of that filter can be represented with an element representative of a zero value in the matrix. For completeness, a binary "1" could be used to represent a non-zero value in the matrix, whilst a binary "0" could be used to represent a zero value within the matrix - although this need not be the case. For example, a binary "0" could be used to represent a non-zero value in the matrix, whilst a binary "1" could be used to represent a zero value within the matrix. It is also to be understood that any other arbitrarily selected value could be used to represent a non-zero value or a zero value within the matrix. As an illustrative example, one or more bits indicative of an even number could be used to represent a non-zero value in the matrix, whilst one or more bits indicative of an odd number could be used to represent a zero value within the matrix.

In the second example, each row of the matrix may be representative of a filter of the one or more filters of the convolution layer. In other words, each row of the matrix may be representative of an output channel of the one or more output channels of the convolution layer. That is, each row of the matrix may be representative of one respective output channel (e.g. filter) of the convolution layer. Each column of the matrix may be representative of an input channel of the one or more input channels of the convolution layer. That is, each column of the matrix may be representative of one respective input channel of the convolution layer.

Referring to Figure 6, in the second example, the matrix 600 comprises a plurality of elements representative of non-zero values marked with an "X", and a plurality of elements representative of zero values that are not marked. In the second example, matrix 600 shown in Figure 6 with 14 rows and 14 columns has been determined for a convolution layer having a set of coefficients arranged in 14 filters (e.g. output channels) (e.g. represented by the 14 rows of matrix 600), each of those 14 filters arranged in 14 input channels (e.g. represented by the 14 columns of matrix 600). For example, row 1 of matrix 600 may represent the first filter of the convolution layer, each column in row 1 representing one of the 14 input channels of that first filter. As such, the elements positioned in row 1, column 7 and row 1, column 10 of matrix 600 are representative of input channels of the first filter that comprise at least one non-zero coefficient, whilst the other elements positioned in row 1 of matrix 600 are representative of input channels of the first filter that comprise exclusively zero coefficients.

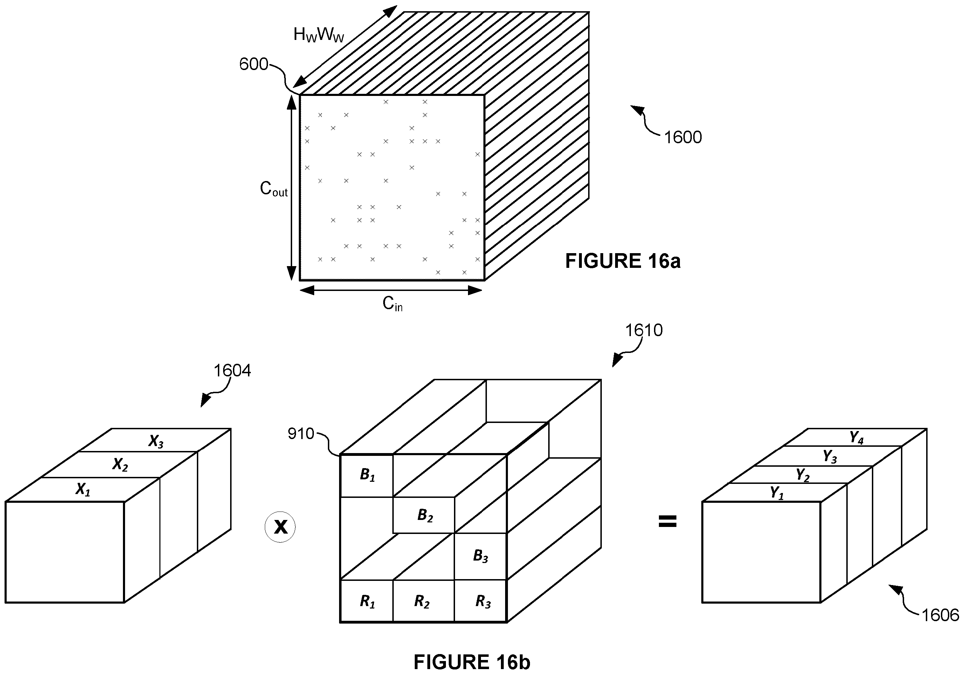

Put another way, in the second example, the matrix 600 may be representative of the $C_{out} \times C_{in}$ plane of the set of coefficients of a convolution layer having dimensions $C_{out} \times C_{in} \times H_w \times W_w$. This is illustrated in Figure 16a. In order to visualise the four-dimensional set of coefficients of a convolution layer, having dimensions $C_{out} \times C_{in} \times H_w \times W_w$, the $H_w \times W_w$ dimensions can be "flattened" - for example, by representing the coefficients of each two-dimensional input channel of each filter, having dimensions $H_w \times W_w$, as a respective one-dimensional sequence of coefficients. These one-dimensional sequences of coefficients are shown in Figure 16a, spanning one-dimension, labelled as $H_w W_w$, of a three-dimensional cuboid 1600 that represents the set of coefficients of a convolution layer. The $C_{out} \times C_{in}$ plane is shown in Figure 16a as the other two dimensions of that three-dimensional cuboid 1600. As such, each one-dimensional sequence of coefficients, $H_w W_w$, can be said to have a ($C_{in}$, $C_{out}$) co-ordinate in the $C_{out} \times C_{in}$ plane. The matrix 600, as described herein, is shown on the $C_{out} \times C_{in}$ plane of the three-dimensional cuboid 1600 shown in Figure 16a. As described herein, in the second example, each element of the matrix 600 represents one input channel of one filter of a convolution layer. An element representative of a non-zero value marked with an "X" in matrix 600 in Figure 16a represents that at least one of the coefficients in the one-dimensional sequence of coefficients $H_w W_w$ having that ($C_{in}$, $C_{out}$) co-ordinate in the $C_{out} \times C_{in}$ plane is a non-zero coefficient. An element representative of a zero value that is not marked in matrix 600 in Figure 16a represents that none of the coefficients in the one-dimensional sequence of coefficients

$H_w W_w$ having that ($C_{in}$, $C_{out}$) co-ordinate in the $C_{out} \times C_{in}$ plane is a non-zero coefficient.

It is described herein that, in the second example, a matrix can be determined in step S504 such that each row of the matrix is representative of one respective output channel (e.g. filter) of the convolution layer, and each column of the matrix is representative of one respective input channel of the convolution layer. It is to be understood that, alternatively, in the second example, a matrix can be determined in step S504 such that each row of the matrix is representative of one respective input channel of the convolution layer, and each column of the matrix is representative of one respective output channel (e.g. filter) of the convolution layer. After defining the matrix to be populated in this way, the elements of that matrix can be populated accordingly by assessing whether the input channel of the filter represented by each element comprises a non-zero coefficient.

In step S506, the rows and/or columns of the matrix determined in step S504 are rearranged (e.g. reordered) so as to gather the plurality of elements representative of non-zero values of the matrix into one or more sub-matrices. The one or more sub-matrices have a greater number of elements representative of non-zero values per total number of elements of the one or more sub-matrices than the number of elements representative of non-zero values per total number of elements of the matrix. In other words, the "non-zero density" of the one or more sub-matrices, as a whole, is greater than the "non-zero density" of the matrix. The at least one processor 404 shown in Figure 4 can be configured to perform step S506.

In some examples, each of the one or more sub-matrices may have a greater number of elements representative of non-zero values per total number of elements of that sub-matrix than the number of elements representative of non-zero values per total number of elements of the matrix. In other words, in these examples, the "non-zero density" of each and every sub-matrix of the one or more sub-matrices is greater than the "non-zero density" of the matrix - although this need not be the case.

In the first example, the one or more sub-matrices comprise a subset of the set of coefficients of the layer selected in step S504. In the second example, the one or more sub-matrices comprise elements representative of a subset of the input channels of the filters of the set of coefficients of the convolution layer selected in step S504. Step S506 is performed in the same way in both the first and second examples.

Step S506 can be understood with reference to Figure 7 - which shows an example rearranged matrix 710 comprising a plurality of sub-matrices 702-1, 702-2, 702-3, 703-4. The rearranged matrix 710 shown in Figure 7 can be formed by rearranging (e.g. reordering) the rows and columns of the matrix 600 shown in Figure 6. That is, Figure 7 shows the 14 rows and 14 columns of the matrix 600 shown in Figure 6 in a different order. For example, column 2 of matrix 600 shown in Figure 6, having elements representative of non-zero values in rows 2, 7 and 13, has been shifted "left" and is now the first column in rearranged matrix 710 shown in Figure 7. In another example, row 7 of matrix 600 shown in Figure 6, having elements representative of non-zero values in columns 2, 4 and 7, has been shifted "up" and is now the first row in rearranged matrix 710 shown in Figure 7. By rearranging the rows and columns as described herein, the plurality of elements representative of non-zero values of the matrix 600 are gathered into sub-matrices 702-1, 702-2, 702-3, 703-4.

Matrix 600 comprises 45 elements representative of non-zero values, and a total of 196 (i.e. 14x14) elements. As such, the "non-zero density" of matrix 600 is 0.23 (i.e. 45/196). Sub-matrices 702-1, 702-2, 702-3, 703-4 also comprise 45 elements representative of non-zero values, but in a total of 103 (i.e. $(3\times4)+(4\times5)+(3\times5)+(4\times14)$) elements. As such, the "non-zero density" of the plurality of sub-matrices 702-1, 702-2, 702-3, 703-4 is 0.44 (i.e. 45/103). Thus, the "non-zero density" of the plurality of sub-matrices 702-1, 702-2, 702-3, 703-4, as a whole, is greater than the "non-zero density" of the matrix 600.

Sub-matrix 702-1 comprises 8 elements representative of non-zero values, and a total of 12 (i.e. 3x4) elements. As such, the "non-zero density" of sub-matrix 702-1 is 0.67 (i.e. 8/12). Sub-matrix 702-2 comprises 9 elements representative of non-zero values, and a total of 20 (i.e. 4x5) elements. As such, the "non-zero density" of sub-matrix 702-2 is 0.45 (i.e. 9/20). Sub-matrix 702-3 comprises 8 elements representative of non-zero values, and a total of 15 (i.e. 3x5) elements. As such, the "non-zero density" of sub-matrix 702-3 is 0.53 (i.e. 8/15). Sub-matrix 702-4 comprises 20 elements representative of non-zero values, and a total of 56 (i.e. 4x14) elements. As such, the "non-zero density" of sub-matrix 702-4 is 0.36 (i.e. 20/56). Thus, the "non-zero density" of each and every sub-matrix of the plurality of sub-matrices 702-1, 702-2, 702-3, 703-4 is greater than the "non-zero density" of the matrix 600.

The rearranged matrix 710 shown in Figure 7 is in "singly-bordered block-diagonal matrix form". This means that the rearranged matrix comprises one or more block arrays arranged on a diagonal, and a border array arranged along one side of the rearranged matrix. The one or more block arrays and the border array are non-overlapping. In Figure 7, the block arrays are labelled 702-1, 702-2 and 702-3 and are arranged on a top-left to bottom-right diagonal. In Figure 7, the border array is labelled 702-4 and is arranged along the bottom of the rearranged matrix 710. In other examples, the one or more block arrays could be arranged on a different diagonal (e.g. top-right to bottom-left), or may not be arranged on a diagonal at all. That is, for example, the columns of rearranged matrix 710 could be permuted differently such that the "horizontal" positions of two or more of the block arrays are swapped. For example, the columns of rearranged matrix 710 could be permuted differently such that the "horizontal" positions of block arrays 702-1 and 702-2 are swapped, e.g. such that block array 702-2 is the "left-most" block array. For example, more specifically, the columns of rearranged matrix 710 could alternatively be ordered: [9, 13, 3, 1, 11, 2, 7, 10, 4, 6, 8, 14, 12, 5]. In other examples, the border array may be arranged along a different side of the rearranged matrix (e.g. along the top, left or right side of the matrix), or there may be more than one border matrix where each border matrix is arranged along a different side of the rearranged matrix. A border array may be termed a horizontal array or a vertical array. A horizonal array may be horizontally arranged across the rearranged matrix. A horizonal array may span the full width of the rearranged matrix. A vertical array may be vertically arranged across the rearranged matrix. A vertical array may span the full height of the rearranged matrix. In these other examples, the rearranged matrix can be said to be in "bordered block matrix form". A matrix in singly-bordered block-diagonal matrix form can also be said to be in bordered block matrix form. As would be understood by the skilled person, a border array need not be arranged along a side of the rearranged matrix. That is, for example, a border array may be arranged between two of the block arrays. For example, the rows of rearranged matrix 710 could be permuted differently such that the "vertical" positions of the border array, and one or more of the block arrays, are swapped. For example, the rows of rearranged matrix 710 could be permuted differently such that the "vertical" positions of the border array 702-4 and the block array 702-3 are swapped. For example, more specifically, the rows of rearranged matrix 710 could alternatively be ordered: [7, 1, 2, 6, 8, 3, 14, 13, 12, 4, 10, 9, 11, 5]. To summarise, the rows and/or columns of the matrix can be rearranged so as to form a rearranged matrix comprising: one or more block arrays which are arranged along a diagonal of the rearranged matrix, and/or one or more block arrays which are not arranged along a diagonal of the rearranged matrix; and one or more horizontal arrays which are horizontally arranged across the rearranged matrix, and/or one or more vertical arrays which are vertically arranged across the rearranged matrix. The plurality of elements representative of non-zero values comprised by the matrix may be gathered into the one or more block arrays, and the one or more horizontal and/or vertical arrays, of the rearranged matrix. Put another way, the rows and/or columns of the matrix can be rearranged so as to form: a rearranged matrix that is in bordered block matrix form; or a rearranged matrix that is a block matrix comprising arrays that are permutable (e.g. able to be rearranged into) into bordered block matrix form.

As described herein, matrix 600 does not have sub-graph separation. As would be understood by the skilled person, this means that it is not possible to rearrange matrix 600 into a block-diagonal matrix form consisting of (e.g. exclusively comprising) a plurality of block arrays arranged on a diagonal into which all of the non-zero values of matrix 600 are gathered.

In step S506, the rows and/or columns of the matrix can be rearranged in dependence on a hypergraph model. A hypergraph model can be used to convert the matrix into "singly-bordered block-diagonal matrix form". A hypergraph model can be formed in dependence on the respective row and column position of each of the plurality of elements representative of non-zero values within the matrix.

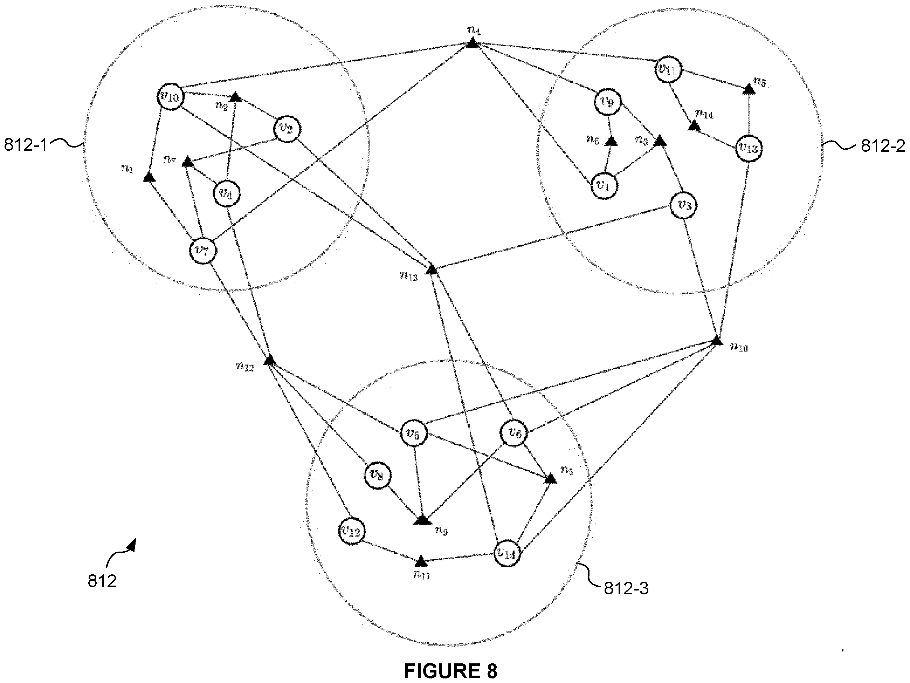

In one example, the hypergraph model is a "rownet" hypergraph model. The matrix 600 shown in Figure 6 can be rearranged to form the rearranged matrix 710 shown in Figure 7 using a rownet hypergraph model. Forming a rownet hypergraph model comprises forming a vertex representative of each column of the matrix that comprises an element representative of a non-zero value and forming a net representative of each row of the matrix that comprises an element representative of a non-zero value. For each of the plurality of elements representative of non-zero values within the matrix, the vertex representative of the column of the matrix comprising that element representative of a non-zero value is connected to the net representative of the row of the matrix comprising that element representative of a non-zero value. This example can be understood with reference to Figure 8 - which shows an example rownet hypergraph model 812 formed for the matrix 600 shown in Figure 6.

In Figure 8, a vertex representative of a column of the matrix 600 is shown as $v_i$, where $i$ is the index of that column. For example, column 10 of matrix 600 is represented by vertex $v_{10}$. A net representative of a row of the matrix 600 is shown as $n_j$, where $j$ is the index of that row. For example, row 1 of matrix 600 is represented by vertex $n_1$. As described herein, the element positioned in row 1, column 10 of matrix 600 is representative of a non-zero value. As such, by way of example, the vertex $v_{10}$ representative of column 10 of matrix 600 comprising that element representative of a non-zero value is connected to the net $n_1$ representative of row 1 of matrix 600 comprising that element representative of a non-zero value. To form the rownet hypergraph model shown in Figure 8, the same vertex-net connecting process has been repeated for each of the elements representative of a non-zero value in the matrix 600 shown in Figure 6 - as will be understood by comparing Figures 6 and 8.

Put another way, a rownet hypergraph model can be constructed for a coefficient matrix $W$ as follows. Let H = $(V, N)$ be a hypergraph $H$ with a vertex set $V$ and a net set $N$. Each column $W(:,i)$ is represented by a vertex $v_i \in V$ and each row $W(j,:)$ is represented by a net $n_j \in N$. A net $n_j$ connects a vertex $v_i$ if there is an element representative of a non-zero value $W(i, j)$ in the coefficient matrix $W$. Vertices connected by net $n_j$ can be denoted as $pins(n_j) = \{v_i \in V | \exists W(j, i) \in W(j,:)\}$.

It is to be understood that, when forming a hypergraph model (e.g. a rownet hypergraph model), a vertex may not be formed for a column of the matrix that does not comprise any elements representative of a non-zero value (none shown in the Figures), and a net may not be formed for a row of the matrix that does not comprise any elements representative of a non-zero value (none shown in the Figures).

In another example, the hypergraph model is a "columnnet" hypergraph model. Forming a columnnet hypergraph model comprises forming a net representative of each column of the matrix that comprises an element representative of a non-zero value and forming a vertex representative of each row of the matrix that comprises an element representative of a non-zero value. For each of the plurality of elements representative of non-zero values within the matrix, the net representative of the column of the matrix comprising that element representative of a non-zero value is connected to the vertex representative of the row of the matrix comprising that element representative of a non-zero value.

Put another way, a columnnet hypergraph model can be constructed for a coefficient matrix $W$ as follows. Let $H = (V, N)$ be a hypergraph $H$ with a vertex set $V$ and a net set $N$. Each row $W(j,:)$ is represented by a vertex $v_j \in V$ and each column $W(:,i)$ is represented by a net $n_i \in N$. A net $n_i$ connects a vertex $v_j$ if there is an element representative of a non-zero value $W(i,j)$ in the coefficient matrix $W$. Vertices connected by net $n_i$ can be denoted as $pins(n_i) = \{v_j \in V | \exists W(j, i) \in W(j,:)\}$.

It is to be understood that, when forming a hypergraph model (e.g. a columnnet hypergraph model), a net may not be formed for a column of the matrix that does not comprise any elements representative of a non-zero value (none shown in the Figures), and/or a vertex may not be formed for a row of the matrix that does not comprise any elements representative of a non-zero value (none shown in the Figures).

Once formed, the hypergraph model can be partitioned. Figure 8 shows a rownet hypergraph model that has been partitioned into three parts 812-1, 812-2, 812-3. It is to be understood that a hypergraph model may be partitioned into any suitable number of parts. The rows and/or columns of the matrix can be rearranged in dependence on the partitioned hypergraph model so as to gather the plurality of elements representative of non-zero values of the matrix into the one or more sub-matrices.

For example, in Figure 8, part 812-1 corresponds to block array 702-1 shown in Figure 7. The elements representative of non-zero values that are positioned in the rows of the matrix that are represented by nets that are connected only to vertices representative of columns of the matrix within part 812-1 are gathered into block array 702-1. For example, in Figure 8, nets $n_1$, $n_2$ and $n_7$ are connected only to vertices within part 812-1 - i.e. respectively, vertices $v_7$ and $v_{10}$; vertices $v_2$, $v_4$ and $v_{10}$; and vertices $v_2$, $v_4$ and $v_7$. As such, the rows and columns of the matrix 600 can be rearranged such that the elements representative of non-zero values that are positioned in rows 1, 2 and 7 are gathered into block array 702-1 - as shown in Figure 7. In an analogous way: part 812-2 corresponds to block array 702-2 shown in Figure 7; and part 812-3 corresponds to block array 702-3 shown in Figure 7.

The elements representative of non-zero values that are positioned in the rows of the matrix that are represented by nets that are connected to vertices representative of columns of the matrix within more than one part are gathered into border array 702-4. For example, in Figure 8, net $n_4$ is connected to vertices within parts 812-1 and 812-2 - i.e. vertices $v_1$, $v_7$, $v_9$, $v_{10}$ and $v_{11}$. As shown in Figure 8, nets $n_{10}$, $n_{12}$ and $n_{13}$ are also connected to vertices within more than one part. As such, the rows and columns of the matrix 600 are rearranged such that the elements representative of non-zero values that are positioned in rows 4, 10, 12 and 13 are gathered into border array 702-4 - as shown in Figure 7. The hypergraph model can be partitioned in dependence on a load balancing constraint that aims to minimise the number of nets that are connected to vertices within more than one of part - e.g. that aims to minimise the number of rows of the border array.

As would be understood by the skilled person, a hypergraph model formed for a matrix having sub-graph separation (not shown in the Figures) would not comprise any nets (or vertices) that are connected to vertices (or nets) within more than one part. That is, there would be no nets (or vertices) "connecting" any of the parts. This would enable that matrix to be converted into a block-diagonal matrix form consisting of (e.g. exclusively comprising) a plurality of block arrays arranged on a diagonal into which all of the non-zero values of that matrix are gathered.

It is to be understood that any row or column of the matrix that does not include any elements representative of a non-zero value (e.g. any row or column for which a net or vertex, as appropriate, was not formed when forming the hypergraph model) can be rearranged (e.g. arbitrarily) to any row or column position within the rearranged matrix. Alternatively, a further "empty" block array (not shown in the Figures) may be formed into which elements of the rows and columns that do not include any elements representative of a non-zero value can be gathered. Said "empty" block array may be used in an equivalent manner as the "non-empty" block arrays during the future computations performed in the compressed layer (as will be described further herein), or not used in (e.g. discarded from) the future computations performed in the compressed layer.

Put another way, a $K$-way vertex partition of a hypergraph model $H$ can be defined as $\Pi(H) = \{V_1, V_2, \cdots V_K\}$ consisting of mutually disjoint and exhaustive subsets of vertices $V_m \in V$ where $V_m \cap V_n = \emptyset$ if $m \neq n$ and $Vm \neq \emptyset$ for all $Vm \in \Pi(H)$ such that $U_{V_m \in \Pi(H)} V_m = V$. Under a partition $\Pi(H)$, the set of parts that are connected by a net $n_j$ can be defined as the connectivity set $\Lambda(n_j)$ and the number of parts that are connected by net $n_j$ can be defined as connectivity $\lambda(n_j) = |\Lambda(n_j)|$. A net $n_j$ is said to be cut (external) if it connects to multiple parts (i.e., $\lambda(n_j) > 1$) and uncut (internal) otherwise (i.e., $\lambda(n_j) = 1$). A net $n_j$ is an internal net of a part $V_m$ if it connects only vertices in part $V_m$ (i.e., $\Lambda(n_j) = V_m$ and $pins(n_j) = V_m$). The set of internal nets of a part $V_m$ is denoted as $N_m$, and the set of external nets of a partition $\Pi(H)$

is denoted as $N_S$. Therefore, a $K$-way vertex partition $\Pi(H)$ can also induces a $(K + 1)$-way partition $\{N_1, N_2, \cdots N_K; N_S\}$ on the net set $N$. Here, $N_S$ is a net separator whose removal gives $K$ disconnected vertex parts $V_1, V_2, \cdots V_K$ as well as $K$ disconnected net parts $N_1, N_2, \cdots N_K$.

A hypergraph model $H$ can be partitioned with the objective of minimizing the number of cut nets under the load balancing constraint $W(V_m) \leq W_{avg}(1 + \varepsilon), \forall V_m \in \Pi(H)$ where the weight of a part $V_m$ is $W(V_m) = \Sigma_{v_i \in V_m} w(v_i)$, the average part weight is $W_{avg} = \Sigma_{v_i \in V} w(v_i)/K$, and the maximum allowed imbalance ratio is $\varepsilon$. The weight of each vertex $v_i$ can be determined as $w(v_i) = 1$. The aim of the load-balancing constraint may be to produce equal-sized block arrays which can each fit in the coefficient buffer of a neural network accelerator (NNA) - e.g. coefficient buffer 330 of neural network accelerator (NNA) 302 shown in Figure 3.

The K-way partition $\Pi(H) = \{V_1, V_2, \cdots V_K\} = \{N_1, N_2, \cdots N_k; N_S\}$ can induce a partial ordering on the rows and columns of coefficient matrix $W$. In this ordering, in examples where the hypergraph model is formed as a rownet hypergraph model, the columns associated with the vertices in $V_{m+1}$ can be ordered after the columns associated with the vertices in $V_m$ for $m = 1,2, \cdots K - 1$. Similarly, the rows represented with the internal nets $N_{m+1}$ of part $V_{m+1}$ can be ordered after the rows associated with the internal nets $N_m$ of part $V_m$ for $m = 1,2, \cdots K - 1$. The rows associated with the external nets $N_S$ are ordered last as the border array. In other words, a vertex $v_i \in V_m$ means permuting column $W(:,i)$ to the mth column slice, an internal net $n_j \in N_m$ means permuting row $W(j,:)$ to the mth row slice and an external net $n_j \in N_S$ means permuting row $W(j,:)$ to border matrix.

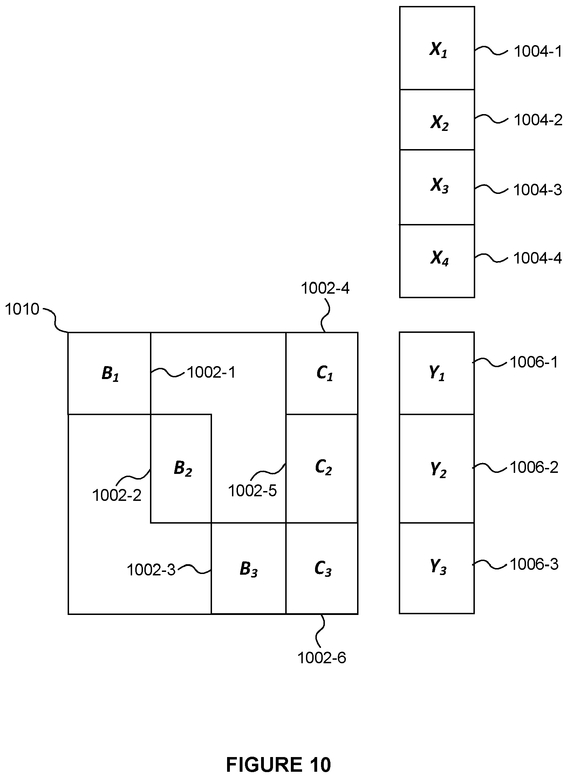

In the example described herein where the hypergraph model is formed as a rownet hypergraph model, partitioning that hypergraph model as described herein will cause the matrix to be rearranged into the singly-bordered block-diagonal form shown in Figure 7 - where the border array is arranged along the bottom of the rearranged matrix 710. In the alternative example described herein where the hypergraph model is a formed as columnnet hypergraph model, partitioning that hypergraph model as described herein will cause the matrix will be rearranged into a singly-bordered block-diagonal form where the border array is arranged along the right side of the rearranged matrix (e.g., see the example rearranged matrix 1010 shown in Figure 10).

It is to be understood that the use of a hypergraph model in step S506 is not essential. Other methods exist for rearranging the rows and/or columns of the matrix so as to gather the plurality of elements representative of non-zero values of the matrix into the one or more sub-matrices. For example, a hypergraph clustering algorithm or graph partitioning algorithm could alternatively be used for this purpose.

Returning to Figure 5, in step S508, a compressed neural network is output comprising a compressed layer arranged to perform a compressed operation in dependence on the one or more sub-matrices formed in step S506. The compressed layer is arranged to perform the same type of operation that the layer selected in step S504 is arranged to perform. That said, the compressed layer is arranged to perform that type of operation in dependence on the one or more sub-matrices formed in step S506, e.g. rather than being arranged to perform that type of operation in dependence on the matrix determined in step S504. In other words, only the subset of the set of coefficients represented by the elements of the one or more sub-matrices formed in step S506 may be used by the compressed layer. This applies to both the first and second examples described herein. The other coefficients of the set of coefficients represented by the elements of the rearranged matrix that are not comprised by one or more sub-matrices formed in step S506 are not used by the compressed layer. Said other coefficients are exclusively zero coefficients, such that an element-wise multiplication between an input activation value and any of those other coefficients would inevitably result in a zero output value - regardless of the value of the input activation value. As such, no "information" is lost by the compressed layer not using said other coefficients. Put another way, the received neural network comprises a layer arranged to perform an operation using a set of coefficients. The one or more sub-matrices are representative of a subset of the set of coefficients of the layer of the received neural network. The compressed layer can be arranged to perform the compressed operation using the subset of the set of coefficients of the layer of the received neural network. The subset of the set of coefficients of the layer of the received neural network comprises all of the non-zero coefficients of the set of coefficients of the layer of the received neural network. That is, none of the non-zero coefficients of the set of coefficients of the layer of the received neural network are set to zero, or discarded, during the method of compressing a neural network described herein. The other coefficients of the set of coefficients not comprised by the subset are exclusively zero coefficients. As such, no information (e.g. non-zero information) is lost by the compressed layer being arranged to perform the compressed operation using the subset of the set of coefficients of the layer of the received neural network, and without using the other coefficients of the set of coefficients not comprised by the subset. In other words, the method of compressing a neural network described herein is a lossless method of compressing a neural network. The at least one processor 404 shown in Figure 4 can be configured to perform step S508.

For example, in the first example defined herein, the selected layer of the received neural network is arranged to perform a fully connected operation by performing a matrix multiplication using the matrix comprising the set of coefficients of the layer and an input matrix comprising a set of input activation values of the layer. In particular, as described herein, a matrix multiplication $WX = Y$ can be performed by the selected layer where: $W$ is the coefficient matrix comprising a set of coefficients (e.g. matrix 600); $X$ is the input matrix comprising a set of input activation values;

and $Y$ is an output matrix comprising a set of output values. Alternatively, as also described herein, a matrix multiplication $XW = Y$ can be performed by the selected layer.

In the first example, in step S508, the compressed neural network is configured such that the compressed layer is arranged to perform a compressed fully connected operation by performing one or more matrix multiplications using the one or more sub-matrices comprising a subset of the set of coefficients of the selected layer and one or more input sub-matrices each comprising a respective subset of the set of input activation values of the selected layer.

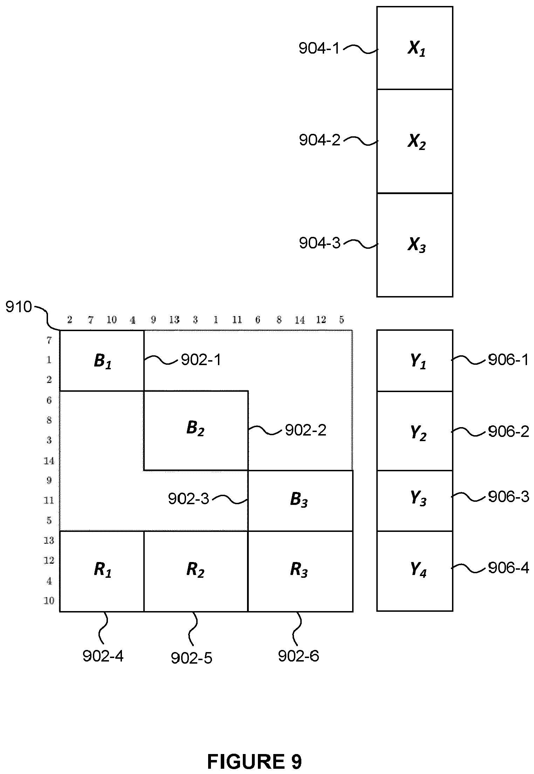

For example, Figure 9 shows how a compressed operation can be performed using a plurality of sub-matrices. Figure 9 shows a "compressed" version of the matrix multiplication $WX = Y$. Figure 9 shows a rearranged coefficient matrix 910 comprising a plurality of sub-matrices - labelled as $B_1$ 902-1, $B_2$ 902-2, $B_3$ 902-3, $R_1$ 902-4, $R_2$ 902-5 and $R_3$ 902-6. Rearranged matrix 910 shown in Figure 9 has the same properties as rearranged matrix 710 shown in Figure 7, as described herein. As shown in Figure 9, each block array of the bordered block matrix 910 can be labelled as a sub-matrix $B$, whilst the border array of the bordered block matrix 910 can be divided into a plurality of sub-matrices $R$. The border array of the bordered block matrix 910 can be divided according to the number of columns comprised by each block array. That is: sub-matrix $R_1$ may have the same number of columns as sub-matrix $B_1$; sub-matrix $R_2$ may have the same number of columns as sub-matrix $B_2$; sub-matrix $R_3$ may have the same number of columns as sub-matrix $B_3$. In the first example, the plurality of sub-matrices $B_1, B_2, B_3, R_1, R_2, R_3$ of the compressed layer comprise a subset of the set of coefficients comprised by the coefficient matrix $W$ (e.g. matrix 600) of the selected layer.

Figure 9 also shows a plurality of input sub-matrices - labelled as $X_1$ 904-1, $X_2$ 904-2, $X_3$ 904-3. In the first example, the plurality of input sub-matrices $X_1, X_2, X_3$ of the compressed layer each comprise a respective subset of the set of input activation values comprised by the input matrix $X$ of the selected layer. In the first example, the rows of the input matrix $X$ may be rearranged (e.g. reordered or permuted) so as to correspond with the rearranged columns of the rearranged coefficient matrix. Each of the plurality of input sub-matrices $X_1, X_2, X_3$ may comprise only the input activation values of the input matrix $X$ that are to be multiplied by the coefficients comprised by the plurality of sub-matrices $B_1, B_2, B_3, R_1, R_2, R_3$ of the compressed layer, as explained further below. The plurality of input sub-matrices $X_1, X_2, X_3$ may comprise a number of rows equal to the number of columns comprised by, respectively, the plurality of sub-matrices $B_1$ and $R_1$, $B_2$ and $R_2$, and $B_3$ and $R_3$. That is: input sub-matrix $X_1$ may have a number of rows equal to the number of columns of sub-matrices $B_1$ and $R_1$; input sub-matrix $X_2$ may have a number of rows equal to the number of columns of sub-matrices $B_2$ and $R_2$; and input sub-matrix $X_3$ may have a number of rows equal to the number of columns of sub-matrices $B_3$ and $R_3$. The rows of the input matrix $X$ may be rearranged (e.g. reordered or permuted) so as to correspond with the rearranged columns of the rearranged coefficient matrix, such that: input sub-matrix $X_1$ comprises input activation values from the rows of $X$ that correspond to (e.g. are to be multiplied with) the coefficient values of the columns of sub-matrices $B_1$ and $R_1$; input sub-matrix $X_2$ comprises input activation values from the rows of $X$ that correspond to (e.g. are to be multiplied with) the coefficient values of the columns of sub-matrices $B_2$ and $R_2$; and input sub-matrix $X_3$ comprises input activation values from the rows of $X$ that correspond to (e.g. are to be multiplied with) the coefficient values of columns of sub-matrices $B_3$ and $R_3$. In examples where each column of the rearranged coefficient matrix includes at least one element representative of a non-zero coefficient, the rows of the input matrix $X$ may be rearranged (e.g. reordered or permuted) so as to form the input sub-matrices $X_1, X_2, X_3$ without discarding any input activation values from the input matrix $X$. That is, the sum of the number of input activation values in all of the input sub-matrices $X_1, X_2, X_3$ may equal the number of input activation values in the input matrix $X$.

Outputting the compressed neural network in step S508 may further comprise adding a gather layer prior to the compressed layer in the compressed neural network. In the first example, the gather layer may be configured to form the one or more input sub-matrices (e.g. input sub-matrices $X_1, X_2, X_3$) by gathering respective subsets of the output activation values formed by a preceding layer of the compressed neural network into the one or more input sub-matrices. A gather layer may be used where a preceding layer or operation of the compressed neural network is not compressed (e.g. remains configured to output data in a single output matrix, rather than in one or more output sub-matrices in the structure or dimensionality as required by the compressed layer), or where a preceding layer of the compressed neural network is compressed in accordance with the method of Figure 5 independently of the selected layer (e.g. such that the compressed preceding layer is configured to output data in one or more output sub-matrices having a different structure or dimensionality to that of the one or more input sub-matrices as required by the compressed selected layer).

Figure 9 also shows a plurality of output sub-matrices - labelled as $Y_1$ 906-1, $Y_2$ 906-2, $Y_3$ 906-3, and $Y_4$ 906-4. In the first example, each of the plurality of output sub-matrices $Y_1, Y_2, Y_3, Y_4$ of the compressed layer comprise a respective subset of the set of output values comprised by the output matrix $Y$ of the selected layer. In the first example, when a "compressed" version of the matrix multiplication $WX = Y$ is to be performed, the plurality of output sub-matrices $Y_1, Y_2, Y_3, Y_4$ can be formed (e.g. a compressed fully connected operation can be performed) using the plurality of input sub-matrices $X_1, X_2, X_3$ and the plurality of sub-matrices $B_1, B_2, B_3, R_1, R_2, R_3$, using Equations (1) and (2) as follows:

$$Y_i = B_i X_i \text{ for } i = 1, 2 \ldots K \qquad (1)$$

$$Y_{K+1} = \sum_1^K R_i X_i \qquad (2)$$

It is to be understood that Equations (1) and (2) are general equations that can be used to perform a compressed fully connected operation (e.g. a "compressed" version of the matrix multiplication $WX = Y$) using the sub-matrices of any $K$-way partitioned singly-bordered block-diagonal matrix rearranged in dependence on a rownet hypergraph model. In this specific example where $K = 3$: output sub-matrix $Y_1$ can be formed by performing the matrix multiplication $Y_1 = B_1 X_1$; output sub-matrix $Y_2$ can be formed by performing the matrix multiplication $Y_2 = B_2 X_2$; output sub-matrix $Y_3$ can be formed by performing the matrix multiplication $Y_3 = B_3 X_3$; and output sub-matrix $Y_4$ can be formed by performing the matrix multiplication $Y_4 = R_1 X_1 + R_2 X_2 + R_3 X_3$.

Outputting the compressed neural network in step S508 may further comprise adding a scatter layer subsequent to the compressed layer in the compressed neural network. In the first example, the scatter layer may be configured to form an output matrix (e.g. output matrix $Y$) by scattering the output activation values comprised by the one or more output sub-matrices (e.g. output sub-matrices $Y_1$, $Y_2$, $Y_3$, $Y_4$) into a single output matrix. The single output matrix may have the same number of elements as the sum of the number of elements in each of the one or more output sub-matrices. Alternatively, the single output matrix may have a greater number of elements than the sum of the number of elements of the one or more output sub-matrices (e.g. if one or more rows or columns of input activation values were discarded when forming the one or more input sub-matrices) - in which case, zero values (i.e. "0"s) can be added as the additional elements. A scatter layer may be used where a subsequent layer or operation of the compressed neural network is not compressed. That is, where a subsequent layer (e.g. fully connected layer) or operation (e.g. summation operation) of the compressed neural network is configured to receive and process input activation data in the format that would have been generated by the (non-compressed) selected layer of the received neural network - e.g. in a single input matrix, rather than in one or more input sub-matrices as output by the compressed layer in the first example.

A rownet hypergraph model, as described herein, can be used to form the rearranged matrix 910 shown in Figure 9. For completeness, Figure 10 shows a rearranged matrix 1010 that can be formed in dependence on a columnnet hypergraph model, as described herein.

Figure 10 shows another example of how a compressed operation can be performed using a plurality of sub-matrices. Figure 10 shows another "compressed" version of the matrix multiplication $WX = Y$. Figure 10 shows a rearranged coefficient matrix 1010 comprising a plurality of sub-matrices - labelled as $B_1$ 1002-1, $B_2$ 1002-2, $B_3$ 1002-3, $C_1$ 1002-4, $C_2$ 1002-5 and $C_3$ 1002-6. As shown in Figure 10, each block array of the bordered block matrix 1010 can be labelled as a sub-matrix $B$, whilst the border array of the bordered block matrix 1010 can be divided into a plurality of sub-matrices $C$. The border array of the bordered block matrix 1010 can be divided according to the number of rows comprised by each block array. That is: sub-matrix $C_1$ may have the same number of rows as sub-matrix $B_1$; sub-matrix $C_2$ may have the same number of rows as sub-matrix $B_2$; sub-matrix $C_3$ may have the same number of rows as sub-matrix $B_3$. In the first example, the plurality of sub-matrices $B_1$, $B_2$, $B_3$, $C_1$, $C_2$, $C_3$ of the compressed layer comprise a subset of the set of coefficients comprised by the coefficient matrix $W$ (e.g. matrix 600) of the selected layer.

Figure 10 also shows a plurality of input sub-matrices - labelled as $X_1$ 1004-1, $X_2$ 1004-2, $X_3$ 1004-3, and $X_4$ 1004-4. In the first example, the rows of the input matrix $X$ may be rearranged (e.g. reordered or permuted) so as to correspond with the rearranged columns of the rearranged coefficient matrix. Each of the plurality of input sub-matrices $X_1$, $X_2$, $X_3$, $X_4$ of the compressed layer comprise a respective subset of the set of input activation values comprised by the input matrix $X$ of the selected layer. In the first example, the plurality of input sub-matrices $X_1$, $X_2$, $X_3$, $X_4$ may comprise only the input activation values of the input matrix $X$ that are to be multiplied by the coefficients comprised by the plurality of sub-matrices $B_1$, $B_2$, $B_3$, $C_1$, $C_2$, $C_3$ of the compressed layer. The plurality of input sub-matrices $X_1$, $X_2$, $X_3$, $X_4$ may comprise a number of rows equal to the number of columns comprised by, respectively, the plurality of sub-matrices $B_1$, $B_2$, $B_3$, and $C_1$, $C_2$, and $C_3$. That is: input sub-matrix $X_1$ may have a number of rows equal to the number of columns of sub-matrix $B_1$, input sub-matrix $X_2$ may have a number of rows equal to the number of columns of sub-matrix $B_2$, input sub-matrix $X_3$ may have a number of rows equal to the number of columns of sub-matrix $B_3$, and input sub-matrix $X_4$ may have a number of rows equal to the number of columns of sub-matrices $C_1$, $C_2$, and $C_3$. The rows of the input matrix $X$ may be rearranged (e.g. reordered or permuted) so as to correspond with the rearranged columns of the rearranged coefficient matrix, such that: input sub-matrix $X_1$ comprises activation values from the rows of $X$ that correspond to (e.g. are to be multiplied with) the coefficient values of the columns of sub-matrix $B_1$; input sub-matrix $X_2$ comprises activation values from the rows of $X$ that correspond to (e.g. are to be multiplied with) the coefficient values of the columns of sub-matrix $B_2$; input sub-matrix $X_3$ comprises activation values from the rows of $X$ that correspond to (e.g. are to be multiplied with) the coefficient values of the columns of sub-matrix $B_3$; and input sub-matrix $X_4$ comprises activation values from the rows of $X$ that correspond to (e.g. are to be multiplied with) the coefficient values of the columns of sub-matrices $C_1$,

$C_2$, and $C_3$. In examples where each column of the rearranged coefficient matrix includes at least one element representative of a non-zero coefficient, the rows of the input matrix $X$ may be rearranged (e.g. reordered or permuted) so as to form the input sub-matrices $X_1$, $X_2$, $X_3$, $X_4$ without discarding any input activation values from the input matrix $X$. That is, the sum of the number of input activation values in all of the input sub-matrices $X_1$, $X_2$, $X_3$, $X_4$ may equal the number of input activation values in the input matrix $X$.

Figure 10 also shows a plurality of output sub-matrices - labelled as $Y_1$ 1006-1, $Y_2$ 1006-2 and $Y_3$ 1006-3. In the first example, each of the plurality of output sub-matrices $Y_1$, $Y_2$, $Y_3$ of the compressed layer comprise a respective subset of the set of output values comprised by the output matrix $Y$ of the selected layer. In the first example, when a "compressed" version of the matrix multiplication $WX = Y$ is to be performed, the plurality of output sub-matrices $Y_1$, $Y_2$, $Y_3$ can be formed (e.g. a compressed fully connected operation can be performed) using the plurality of input sub-matrices $X_1$, $X_2$, $X_3$, $X_4$ and the plurality of sub-matrices $B_1$, $B_2$, $B_3$, $C_1$, $C_2$, $C_3$, using Equations (3) and (4) as follows:

$$Y_i \text{ for } i = 1,2 \dots K \qquad (3)$$

$$Y_i = B_i X_i + C_i X_{K+1} \qquad (4)$$

It is to be understood that Equations (3) and (4) are general equations that can be used to perform a compressed fully connected operation (e.g. a "compressed" version of the matrix multiplication $WX = Y$) using the sub-matrices of any $K$-way partitioned singly-bordered block-diagonal matrix rearranged in dependence on a columnnet hypergraph model. In this specific example where $K = 3$: output sub-matrix $Y_1$ can be formed by performing the matrix multiplication $Y_1 = B_1 X_1 + C_1 X_4$; output sub-matrix $Y_2$ can be formed by performing the matrix multiplication $Y_2 = B_2 X_2 + C_2 X_4$; and output sub-matrix $Y_3$ can be formed by performing the matrix multiplication $Y_3 = B_3 X_3 + C_3 X_4$.

It is to be understood that the skilled person would have no difficulty applying the principles described herein with reference to Figures 9 and/or 10 to implement a compressed layer that is arranged to perform a compressed fully connected operation by performing a "compressed" version of the matrix multiplication $XW = Y$ using the sub-matrices of a rearranged coefficient matrix as output from step S506 as described herein.

In the second example defined herein, the selected layer of the received neural network is a convolution layer that is arranged to perform a convolution operation by convolving a set of input activation values of the convolution layer with the set of coefficients of the convolution layer. As will be understood with reference to the description herein of Figures 2a and 2b, to perform a convolution operation, the first input channel of the input activation data is convolved with the first input channel of each filter in the set of coefficients, the second input channel of the input activation data is convolved with the second input channel of each filter in the set of coefficients, and so on through to the $N^{th}$ input channel of the input activation data being convolved with the $N^{th}$ input channel of each filter in the set of coefficients.

In the second example, each of the one or more sub-matrices formed in step S506 comprise a plurality of elements representative of a respective subset of the input channels of the filters of the set of coefficients of the convolution layer. For example, referring back to Figures 6 and 7, matrix 600 shown in Figure 6 comprises 196 elements representative of 196 filter input channels (i.e. 14 input channels of 14 filters). By contrast, the plurality of sub-matrices 702-1, 702-2, 702-3 and 702-4 shown in Figure 7 comprise 103 elements representative of 103 filter input channels (i.e. a subset of the 14 input channels of 14 filters).

In step S508, in the second example, the compressed neural network is configured such that the compressed layer is arranged to perform a compressed convolution operation by convolving one or more subsets of the input activation values of the convolution layer with the subsets of the set of coefficients of the convolution layer comprised by the one or more subsets of the input channels of the filters represented by elements of the one or more sub-matrices. As would be understood by the skilled person, the compressed convolution operation can be performed with any stride, padding and/or dilation parameters, as necessary.

For example, Figure 16b illustrates how a compressed operation can be performed using a plurality of subsets of the set of coefficients of a convolution layer. Figure 16b illustrates a rearranged set of coefficients of a convolution layer in three-dimensions using a cuboid 1610, in accordance with the principles described herein with reference to Figure 16a. A rearranged matrix 910, having equivalent properties to rearranged matrix 710 shown in Figure 7 and rearranged matrix 910 shown in Figure 9, is shown on the $C_{out} \times C_{in}$ plane of the rearranged cuboid 1610. Each of the one-dimensional sequences of coefficients, $H_w W_w$, having a $(C_{in}, C_{out})$ co-ordinate in the $C_{out} \times C_{in}$ plane of rearranged cuboid 1610 is arranged (e.g. following the rearrangement of matrix 600 shown on cuboid 1600) in accordance with the row and column order of rearranged matrix 910.

As described herein, rearranged coefficient matrix 910 comprises a plurality of sub-matrices - labelled as $B_1$, $B_2$, $B_3$, $R_1$, $R_2$ and $R_3$. The plurality of sub-matrices $B_1$, $B_2$, $B_3$, $R_1$, $R_2$ and $R_3$ shown in Figure 16b have the same properties as the plurality of sub-matrices $B_1$, $B_2$, $B_3$, $R_1$, $R_2$ and $R_3$ described herein with reference to Figure 9. Each of said plurality of sub-matrices $B_1$, $B_2$, $B_3$, $R_1$, $R_2$ and $R_3$ comprises a plurality of elements representative of a respective subset of the input channels of the filters of the set of coefficients of the convolution layer.

As described herein, a set of input activation data of a convolution layer may have dimensions $C_{in} \times H_a \times W_a$. In the second example, the $C_{in}$ dimension of the input activation data of a convolution layer may be rearranged (e.g. reordered or permuted) so as to correspond with the rearranged $C_{in}$ dimension of the rearranged set of coefficients of a convolution layer. Figure 16b illustrates a rearranged set of input activation data 1604 of a convolution layer. As shown in Figure 16b, rearranged set of input activation data can be divided into a plurality of subsets of input activation data $X_1$, $X_2$, $X_3$. The plurality of subsets of input activation data $X_1$, $X_2$, $X_3$ may comprise a number of input channels ($C_{in}$) equal to the number of input channels ($C_{in}$) comprised by, respectively, the subsets of the input channels of the filters of the set of coefficients of the convolution layer represented by the elements of the plurality of sub-matrices $B_1$ and $R_1$, $B_2$ and $R_2$, and $B_3$ and $R_3$. That is: subset of input activation data $X_1$ may have a number of input channels ($C_{in}$) equal to the number of input channels ($C_{in}$) of the subset of the input channels of the filters of the set of coefficients of the convolution layer represented by the elements of sub-matrices $B_1$ and $R_1$; subset of input activation data $X_2$ may have a number of input channels ($C_{in}$) equal to the number of input channels ($C_{in}$) of the subset of the input channels of the filters of the set of coefficients of the convolution layer represented by the elements of sub-matrices $B_2$ and $R_2$; and subset of input activation data $X_3$ may have a number of input channels ($C_{in}$) equal to the number of input channels ($C_{in}$) of the subset of the input channels of the filters of the set of coefficients of the convolution layer represented by the elements of sub-matrices $B_3$ and $R_3$. The $C_{in}$ dimension of the input activation data of a convolution layer may be rearranged (e.g. reordered or permuted) so as to correspond with the rearranged $C_{in}$ dimension of the rearranged set of coefficients of a convolution layer, such that: subset of input activation data $X_1$ comprises activation values from the input channels ($C_{in}$) of the input activation data that correspond to (e.g. are to be convolved with) the subset of the input channels of the filters of the set of coefficients of the convolution layer represented by the elements of sub-matrices $B_1$ and $R_1$; subset of input activation data $X_2$ comprises activation values from the input channels ($C_{in}$) of the input activation data that correspond to (e.g. are to be convolved with) the subset of the input channels of the filters of the set of coefficients of the convolution layer represented by the elements of sub-matrices $B_2$ and $R_2$; and subset of input activation data $X_3$ comprises activation values from the input channels ($C_{in}$) of the input activation data that correspond to (e.g. are to be convolved with) the subset of the input channels of the filters of the set of coefficients of the convolution layer represented by the elements of sub-matrices $B_3$ and $R_3$. In examples where each column of the rearranged matrix includes at least one element representative of a non-zero value, the $C_{in}$ dimension of the input activation data of a convolution layer may be rearranged (e.g. reordered or permuted) so as to form the subsets of input activation data $X_1$, $X_2$, $X_3$ without discarding any input activation values from the input activation data. That is, the sum of the number of input activation values in all of the subsets of input activation data $X_1$, $X_2$, $X_3$ may equal the number of values in the input activation data.

As described herein, outputting the compressed neural network in step S508 may further comprise adding a gather layer prior to the compressed layer in the compressed neural network. In the second example, the gather layer may be configured to gather respective subsets of the output activation values formed by a preceding layer of the compressed neural network so as to form the one or more subsets of input activation data to be operated on in the compressed convolution layer (e.g. the plurality of subsets of input activation data $X_1$, $X_2$, $X_3$ shown in the example illustrated in Figure 16b). A gather layer may be used where a preceding layer or operation of the compressed neural network is not compressed, or where a preceding layer of the compressed neural network is compressed in accordance with the method of Figure 5 independently of the selected layer.

Figure 16b also shows a plurality of subsets of output activation data 1606 - labelled as $Y_1$, $Y_2$, $Y_3$, and $Y_4$. In the second example, each of the plurality of subsets of output activation data $Y_1$, $Y_2$, $Y_3$, $Y_4$ of the compressed layer comprise a respective subset of the set of output values comprised by the output data of the selected layer. In the second example, the plurality of subsets of output activation data $Y_1$, $Y_2$, $Y_3$, $Y_4$ can be formed (e.g. a compressed convolution operation can be performed) using the plurality of subsets of input activation data $X_1$, $X_2$, $X_3$ and the plurality of subsets of the input channels of the filters of the set of coefficients of the convolution layer represented by the elements of sub-matrices $B_1$, $B_2$, $B_3$, $R_1$, $R_2$, $R_3$, using Equations (5) and (6) as follows:

$$Y_i = X_i \circledast B_i \text{ for } i = 1,2 \dots K \qquad (5)$$

$$Y_{K+1} = \sum_1^K X_i \circledast R_i \qquad (6)$$

The symbol $\circledast$ denotes convolution operation. That is, $X_i \circledast B_i$ represents convolving the subset of input activation data $X_i$ with the subset of the input channels of the filters of the set of coefficients of the convolution layer represented by the elements of sub-matrix $B_i$. It is to be understood that Equations (5) and (6) are general equations that can be used to perform a compressed convolution operation in dependence on the sub-matrices of any $K$-way partitioned singly-bordered block-diagonal matrix rearranged in dependence on a rownet hypergraph model. In this specific example where $K = 3$: subset of output activation data $Y_1$ can be formed by performing the convolution $Y_1 = B_1 \circledast X_1$; subset of output activation data $Y_2$ can be formed by performing the convolution $Y_2 = B_2 \circledast X_2$; subset of output activation data $Y_3$ can be formed by performing the convolution $Y_3 = B_3 \circledast X_3$; and subset of output activation data $Y_4$ can be formed by performing the convolutions $Y_4 = R_1 \circledast X_1 + R_2 \circledast X_2 + R_3 \circledast X_3$.

As described herein, outputting the compressed neural network in step S508 may further comprise adding a scatter layer subsequent to the compressed layer in the compressed neural network. In the second example, the scatter layer may be configured to form a set of output activation values by scattering the subsets of output activation values formed by the compressed convolution layer into a single set of output activation values. The single set of output activation values may have the same number of output activation values as the sum of the number of output activation values in each of the one or more subsets of output activation values. Alternatively, the single set of output activation values may have a greater number of output activation values than the number of output activation values of the set of output activation values formed by the compressed convolution layer (e.g. if one or more input channels of input activation values were discarded when forming the one or more subsets of input activation data) - in which case zero values (i.e. "0"s) can be added as the additional values. A scatter layer may be used where a subsequent layer or operation of the compressed neural network is not compressed - e.g. where a subsequent layer (e.g. convolution layer) or operation (e.g. summation operation) of the compressed neural network is configured to receive and process input activation data in the format that would have been generated by the (non-compressed) selected layer of the received neural network.

In light of the principles described herein, it will also be understood that, although not illustrated in the Figures or described in detail for conciseness, the following Equations (7) and (8) are general equations that can be used to perform a compressed convolution operation in dependence on the sub-matrices of any $K$-way partitioned singly-bordered block-diagonal matrix rearranged in dependence on a columnnet hypergraph model:

$$Y_i \text{ for } i = 1,2 \ldots K \qquad (7)$$

$$Y_i = X_i \circledast B_i + X_{K+1} \circledast C_i \qquad (8)$$

For example, in a specific example where $K = 3$ (e.g. as is the case for the rearranged sub-matrix 1010 shown in Figure 10, as described herein): a subset of output activation data $Y_1$ can be formed by performing the convolutions $Y_1 = B_1 \circledast X_1 + C_1 \circledast X_4$; a subset of output activation data $Y_2$ can be formed by performing the convolutions $Y_2 = B_2 \circledast X_2 + C_2 \circledast X_4$; and a subset of output activation data $Y_3$ can be formed by performing the convolutions $Y_3 = B_3 \circledast X_3 + C_3 \circledast X_4$.

Step S508 may comprise storing the compressed neural network for subsequent implementation. For example, referring to Figure 4, the at least one processor 404 may write the compressed neural network into memory 406 for subsequent implementation. Step S508 may comprise outputting a computer readable description of the compressed neural network that, when implemented at a system for implementing a neural network (e.g. system 300 shown in Figure 3), causes the compressed neural network to be executed. Step S508 may comprise configuring a system for implementing a neural network to implement the compressed neural network.

Step S508 may comprise configuring hardware logic to implement the compressed neural network. The hardware logic may comprise a neural network accelerator. For example, referring to Figure 4, the at least one processor 404 may be configured to configure hardware logic comprised by the system 300 for implementing a neural network to implement the compressed neural network.

The compressed neural network output in step S508 may be used. The compressed neural network output in step S508 may be used to perform image processing. By way of non-limiting example, the compressed neural network may be used to perform one or more of image super-resolution processing, semantic image segmentation processing and object detection. For example, performing image super-resolution processing involves the compressed neural network processing a lower-resolution image input to the neural network in order to output a higher-resolution image.

Compressing the received neural network in accordance with the method described herein with reference to Figure 5 is advantageous because only a subset of the set of coefficients of the selected layer of the received neural network are used by the compressed layer of the compressed neural network. That is, only the subset of the set of coefficients represented by the elements of the one or more sub-matrices formed in step S506 are used by the compressed layer. This applies to both the first and second examples described herein. The other coefficients of the set of coefficients represented by the elements of the rearranged matrix that are not comprised by one or more sub-matrices formed in step S506 are not used by the compressed layer. This means that, when implementing the compressed neural network, e.g. at neural network accelerator 302 shown in Figure 3, those other coefficients need not be stored in memory, e.g. off-chip memory 304. This reduces the memory footprint of the compressed neural network relative to the received neural network. Further, this means that fewer coefficients need to be read into the neural network accelerator at run-time in order to implement the compressed layer, relative to the selected layer. This reduces the weight bandwidth required to implement the compressed layer, relative to the selected layer. For the same reason, the time taken to read in the set of coefficients of the compressed layer from memory is also reduced, relative to the selected layer. This can reduce the latency of the compressed neural network, relative to the received neural network. The smaller set of coefficients used by the compressed layer also reduces the computational demand on the processing elements of the neural network accelerator implementing the compressed neural network - by reducing the number of multiply and accumulate operations to be performed by those processing elements in order to perform the compressed operation - again, relative to the larger set of coefficients used by the selected layer. Finally, as defined herein, each subset of the set of coefficients need only operate on a subset of the set of input activation values of the selected layer. This means that, often, fewer input activation values need to be read into the on-chip memory and/or input buffer of the neural network accelerator in each cycle at run-time in order to implement the compressed layer, relative to the selected layer. This reduces the activation bandwidth required to implement the compressed layer, relative to the selected layer.

Figure 11 shows a second method of compressing a neural network. The method of compressing a neural network shown in Figure 11 is a computer-implemented method. The processing system 400 for compressing a neural network shown in Figure 4 may be configured to perform the method of compressing a neural network shown in Figure 11.

In step S1102, a neural network is received. Step S1102 may be performed in an analogous way to step S502 as described herein. The neural network (e.g. the software model defining that neural network) may be received at processing system 400 shown in Figure 4, and stored in memory 406.

In step S1104, two or more adjacent layers of the received neural network are selected. The two or more adjacent layers comprise a first layer and a second, subsequent, layer of the received neural network. The first layer is arranged to perform a first operation. The set of activation values output by the first layer (e.g. as a result of performing the first operation) are the set of activation values input to the second, subsequent layer. The second layer is arranged to perform a second operation. The first layer and the second layer may both be arranged to perform the same type of operation. In a first example, the first layer and the second layer may both be fully connected layers. In a second example, the first layer and the second layer may both be convolution layers. Alternatively, the first layer and the second layer may be arranged to perform different types of operation. For example, the first layer may be a convolution layer and the second layer may be a fully connected layer.

Each of the selected two or more adjacent layers have one or more input channels and one or more output channels. The one or more output channels of the first layer correspond to the one or more input channels of the second, subsequent, layer. In other words, for 1 to $N$, the $N^{th}$ output channel of the set of coefficients of the first layer may be responsible for forming the channel of output activation data that will be operated on by the $N^{th}$ input channel of the set of coefficients of the second layer.

In the first example, the first layer and the second layer may both be fully connected layers arranged to perform matrix multiplications. The first layer may be configured to perform a matrix multiplication $W_0 X_0 = Y_0$ where: $W_0$ is a first matrix comprising a set of coefficients of the first layer and having dimensions $C_0^{out} \times C_0^{in}$ ; $X_0$ is a first input matrix comprising a set of input activation values of the first layer and having dimensions $M_0 \times N_0$, where $C_0^{in} = M_0$ ; and $Y_0$ is a first output matrix comprising a set of output values of the first layer and having dimensions $C_0^{out} \times N_0$. As described herein, the set of activation values output by the first layer (i.e. $Y_0$) are the set of activation values input to the second, subsequent layer. Thus, the second layer may be configured to perform a matrix multiplication $W_1 Y_0 = Y_1$ where: $W_1$ is a first matrix comprising a set of coefficients of the first layer and having dimensions $C_1^{out} \times C_1^{in}$ ; and $Y_1$ is a second output matrix comprising a set of output values of the second layer. As would be understood by the skilled person, to perform the matrix multiplication $W_1 Y_0 = Y_1$, the number of columns of $W_1$ must equal the number of rows of $Y_0$. Thus, $C_1^{in} = C_0^{out}$ . As such, when both the first and second layers are fully connected layers, it can be said that the one or more output channels ( $C_0^{out}$ ) of the first layer of the two or more adjacent layers correspond to the one or more input channels ( $C_1^{in}$ ) of the second, subsequent, layer of the two or more adjacent layers.

Alternatively, in the first example, the first layer may be configured to perform a matrix multiplication $X_0 W_0 =$

$Y_0$ where: $X_0$ is a first input matrix comprising a set of input activation values of the first layer and having dimensions $M_0 \times N_0$; $W_0$ is a first matrix comprising a set of coefficients of the first layer and having dimensions $C_0^{in} \times C_0^{out}$, where $C_0^{in} = N_0$; and $Y_0$ is a first output matrix comprising a set of output values of the first layer and having dimensions $M_0 \times C_0^{out}$. As described herein, the set of activation values output by the first layer (i.e. $Y_0$) are the set of activation values input to the second, subsequent layer. Thus, the second layer may be configured to perform a matrix multiplication $Y_0 W_1 = Y_1$ where: $W_1$ is a first matrix comprising a set of coefficients of the first layer and having dimensions $C_1^{in} \times C_1^{out}$; and $Y_1$ is a second output matrix comprising a set of output values of the second layer. As would be understood by the skilled person, to perform the matrix multiplication $Y_0 W_1 = Y_1$, the number of columns of $Y_0$ must equal the number of rows of $W_1$. Thus, $C_0^{out} = C_1^{in}$. As such, in this alternative of the first example, when both the first and second layers are fully connected layers, it can also be said that the one or more output channels ($C_0^{out}$) of the first layer of the two or more adjacent layers correspond to the one or more input channels ($C_1^{in}$) of the second, subsequent, layer of the two or more adjacent layers.

In the second example, the first layer and the second layer may both be convolution layers. As described herein with reference to Figures 2a and 2b, the number of output channels (e.g. filters) in the set of coefficients a layer (e.g. the first layer) corresponds to (e.g. is equal to) the number of channels in the set of output activation values formed by that layer. As described herein, the set of activation values output by the first layer are the set of activation values input to the second, subsequent, layer. As described herein with reference to Figures 2a and 2b, the number of input channels in the set of coefficients a layer (e.g. the second layer) corresponds to (e.g. is equal to) the number of input channels in set of activation values input to that layer. Thus, it follows that, the number of output channels (e.g. filters) in the set of coefficients of the first layer will equal the number of input channels in the set of coefficients of the second, subsequent, layer. Each filter in the set of coefficients of the first layer is responsible for forming the channel of output activation data that will be operated on by the corresponding input channel of the set of coefficients of the second layer. As such, when both the first and second layers are convolution layers, it can be said that the one or more output channels of the first layer of the two or more adjacent layers correspond to the one or more input channels of the second, subsequent, layer of the two or more adjacent layers.

In step S1106, a first matrix (e.g. $W_0$) representative of a set of coefficients of the first layer of the received neural network is determined. The first matrix comprises a plurality of elements representative of non-zero values and a plurality of elements representative of zero values. The one or more rows or columns of the first matrix are representative of the one or more output channels of the first layer and the one or more other of the rows or columns of the first matrix are representative of the one or more input channels of the first layer. For example, the one or more rows of the first matrix may be representative of the one or more output channels of the first layer and the one or more columns of the first matrix may be representative of the one or more input channels of the first layer. Alternatively, the one or more columns of the first matrix may be representative of the one or more output channels of the first layer and the one or more rows of the first matrix may be representative of the one or more input channels of the first layer. Step S1106 may be performed for the first layer in an analogous way to step S504 is performed for the selected layer as described herein. The first layer may be a fully connected layer or a convolution layer. The at least one processor 404 shown in Figure 4 can be configured to perform step S1106.

In step S1 108, a second matrix (e.g. $W_1$) representative of a set of coefficients of the second layer of the received neural network is determined. The second matrix comprises a plurality of elements representative of non-zero values and a plurality of elements representative of zero values. The one or more rows or columns of the second matrix are representative of the one or more output channels of the second layer and the one or more other of the rows or columns of the second matrix are representative of the one or more input channels of the second layer. For example, the one or more rows of the second matrix may be representative of the one or more output channels of the second layer and the one or more columns of the second matrix may be representative of the one or more input channels of the second layer. Alternatively, the one or more columns of the second matrix may be representative of the one or more output channels of the second layer and the one or more rows of the second matrix may be representative of the one or more input channels of the second layer. Step S1108 may be performed for the second layer in an analogous way to step S504 is performed for the selected layer as described herein. The second layer may be a fully connected layer or a convolution layer. The at least one processor 404 shown in Figure 4 can be configured to perform step S1108.

In step S1110, an array is formed. In some examples, in steps S1106 and S1108, the first and second matrices are determined in a "consistent" manner - e.g. such that the rows or columns of both the first matrix and the second matrix represent the same type of channel (e.g. input or output channel). For example, the one or more rows of the first matrix may be representative of the one or more output channels of the first layer, the one or more columns of the first matrix may be representative of the one or more input channels of the first layer, the one or more rows of the second matrix may be representative of the one or more output channels of the second layer, and the one or more columns of the second matrix may be representative of the one or more input channels of the second layer. Alternatively, the one or more columns of the first matrix may be representative of the one or more output channels of the first layer, the one or more rows of the first matrix may be representative of the one or more input channels of the first layer, the one or more columns of the second matrix may be representative of the one or more output channels of the second layer, and the one or more rows of the second matrix may be representative of the one or more input channels of the second layer.

In these "consistent matrix" examples, the array can be formed by transposing the first matrix and forming the array comprising the transposed first matrix and the second matrix by aligning the columns or rows of the transposed first matrix that are representative of the one or more output channels of the first layer with the columns or rows of the second matrix that are representative of the one or more input channels of the second layer. For example, for 1 to $N$, the $N^{th}$ column of the transposed first matrix that is representative of the $N^{th}$ output channel of the first layer can be aligned with (e.g. included in the same column of the array as) the $N^{th}$ column of the second matrix that is representative of the $N^{th}$ input channel of the second layer - where the $N^{th}$ output channel of the first layer corresponds with (e.g. is responsible for forming the channel of output activation data that will be operated on by) the $N^{th}$ input channel of the second layer. Alternatively, for 1 to $N$, the $N^{th}$ row of the transposed first matrix that is representative of the $N^{th}$ output channel of the first layer can be aligned with (e.g. included in the same row of the array as) the $N^{th}$ row of the second matrix that is representative of the $N^{th}$ input channel of the second layer - where the $N^{th}$ output channel of the first layer corresponds with (e.g. is responsible for forming the channel of output activation data that will be operated on by) the $N^{th}$ input channel of the second layer. In other words, within the array, each output channel of the first layer is aligned with its corresponding input channel of the second layer.

Alternatively, in these "consistent matrix" examples, the array can be formed by transposing the second matrix and forming the array comprising the transposed second matrix and the first matrix by aligning the rows or columns of the transposed second matrix that are representative of the one or more input channels of the second layer with the rows or columns of the first matrix that are representative of the one or more output channels of the first layer. For example, for 1 to $N$, the $N^{th}$ row of the first matrix that is representative of the $N^{th}$ output channel of the first layer can be aligned with (e.g. placed in the same row of the array as) the $N^{th}$ row of the transposed second matrix that is representative of the $N^{th}$ input channel of the second layer - where the $N^{th}$ output channel of the first layer corresponds with (e.g. is responsible for forming the channel of output data that will be operated on by) the $N^{th}$ input channel of the second layer. Alternatively, for 1 to $N$, the $N^{th}$ column of the first matrix that is representative of the $N^{th}$ output channel of the first layer can be aligned with (e.g. placed in the same column of the array as) the $N^{th}$ column of the transposed second matrix that is representative of the $N^{th}$ input channel of the second layer - where the $N^{th}$ output channel of the first layer corresponds with (e.g. is responsible for forming the channel of output data that will be operated on by) the $N^{th}$ input channel of the second layer. In other words, within the array, each output channel of the first layer is aligned with its corresponding input channel of the second layer.

In general, in these "consistent matrix" examples, to form an array according to the principles described herein, the matrix determined for every-other layer in a series of adjacent layers can be transposed, such that the corresponding output channels and input channels of adjacent layers within that series can be aligned. The first matrix to be transposed can be either the matrix determined for the first layer in a series of adjacent layers, or the matrix determined for the second layer in that series of adjacent layers - with the matrix determined for every-other layer in that series of adjacent layers being transposed thereafter. The at least one processor 404 shown in Figure 4 can be configured to perform step S1110.

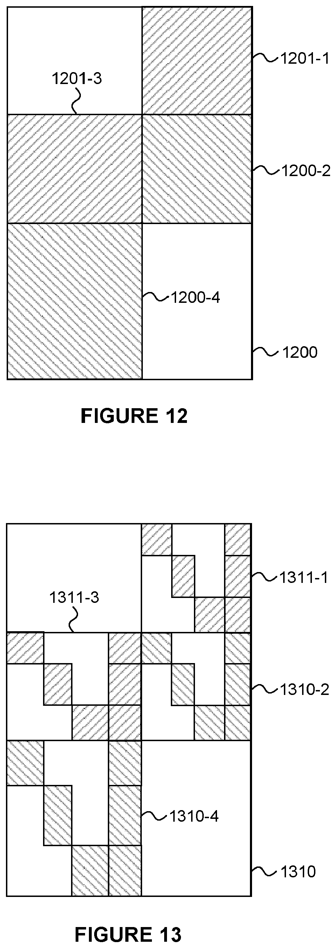

Step S1110 can be understood with reference to Figure 12 - which shows an example array 1200. The array 1200 of Figure 12 is formed by transposing the first matrix, $W_0$, and forming the array 1200 comprising the transposed first matrix $(W_0)^T$ 1201-1 and the second matrix $W_1$ 1200-2 by aligning the columns of the transposed first matrix $(W_0)^T$ 1201-1 that are representative of the one or more output channels of the first layer with the columns of the second matrix $W_1$ 1200-2 that are representative of the one or more input channels of the second layer.

To aid the reader's understanding, Figure 12 also shows a transposed third matrix $(W_2)^T$ 1201-3 that has been determined by transposing a third matrix determined (e.g. as described with reference to step S504 of Figure 5) for a third layer of the received neural network that is adjacent to, and subsequent to, the second layer. In the array 1200, the rows of the second matrix $W_1$ 1200-2 that are representative of the one or more output channels of the second layer are aligned with the rows of the transposed third matrix $(W_2)^T$ 1201-3 that are representative of the one or more input channels of the third layer. Also shown in Figure 12 is a fourth matrix $W_3$ 1201-4 that has been determined (e.g. as described with reference to step S504 of Figure 5) for a fourth layer of the received neural network that is adjacent to, and subsequent to, the third layer. In the array 1200, the columns of the transposed third matrix $(W_2)^T$ 1201-3 that are representative of the one or more output channels of the third layer are aligned with the columns of the fourth matrix $W_3$ 1201-4 that are representative of the one or more input channels of the fourth layer. The transposed third matrix $(W_2)^T$ 1201-3 and fourth matrix $W_3$ 1201-4 are shown in the array 1200 of Figure 12 to illustrate that the method of compressing a neural network as described herein with reference to Figure 11 can be applied to a series of more than two adjacent layers of a received neural network. In fact, the method of compressing a neural network as described herein with reference to Figure 11 can be applied to any number of adjacent layers of a received neural network.

The array 1200 of Figure 12 shows the plurality of matrices arranged from the top-right corner of the array 1200 to the bottom-left corner of the array 1200 in a step-down, step-left pattern. It is to be understood that the same plurality of matrices (e.g. $(W_0)^T$, $W_1$, $(W_2)^T$, $W_3$) could alternatively be arranged: from the top-left corner of the array to the bottom-right corner of the array in a step-down, step-right pattern; from the bottom-left corner of the array to the top-right corner of the array in a step-up, step-right pattern; or from the bottom-right corner of the array to the top-left corner of the array in a step-up, step-left pattern. In the alternative example where the array is formed by transposing the second matrix $W_1$, the plurality of matrices (e.g. $W_0$, $(W_1)^T$, $W_2$, $(W_3)^T$) could be arranged: from the top-right corner of the array to the bottom-left corner of the array in a step-left, step-down pattern; from the top-left corner of the array to the bottom-right corner of the array in a step-right, step-down pattern; from the bottom-left corner of the array to the top-right corner of the array in a step-right, step-up pattern; or from the bottom-right corner of the array to the top-left corner of the array in a step-left, step-up pattern.

It is to be understood that, in steps S1106 and S1108, the first and second matrices can alternatively be determined in an "inconsistent" manner - e.g. such that the rows or columns of the first matrix and the second matrix represent different types of channel (e.g. input or output channel). For example, when the first layer and the second layer are both convolution layers, when performing the method of Figure 11 it may be predetermined that the matrices representative of the sets of coefficients of adjacent layers will be defined "inconsistently" and then populated accordingly by assessing whether the input channel of the filter represented by each element of those matrices comprises a non-zero coefficient. In particular, the first matrix may be determined such that the one or more rows of the first matrix are representative of the one or more output channels of the first layer, and the one or more columns of the first matrix are representative of the one or more input channels of the first layer; and ("inconsistently") the second matrix may be determined such that the one or more columns of the second matrix are representative of the one or more output channels of the second layer, and the one or more rows of the second matrix are representative of the one or more input channels of the second layer. Alternatively, the first matrix may be determined such that the one or more columns of the first matrix are representative of the one or more output channels of the first layer, and the one or more rows of the first matrix are representative of the one or more input channels of the first layer; and ("inconsistently") the second matrix may be determined such that the one or more rows of the second matrix are representative of the one or more output channels of the second layer, and the one or more columns of the second matrix are representative of the one or more input channels of the second layer. It is to be understood that, in these "inconsistent matrix" examples, forming the array need not include transposing either of the first matrix or the second matrix (or the third or fourth matrix, where the method is performed for a series of four adjacent layers). That is, an array comprising the first matrix and the second matrix can be formed by aligning the rows or columns of the first matrix that are representative of the one or more output channels of the first layer with the rows or columns of the second matrix that are representative of the one or more input channels of the second layer.

It is also to be understood that, in examples where the first layer is a convolution layer and the second layer is a fully connected layer, forming the array may further comprise including an intermediate flatten-matrix (not shown in the Figures) in between the first matrix or transposed first matrix representative of the first, convolution, layer and the second matrix or second transposed matrix representative of the second, fully connected, layer. The intermediate flatten-matrix should connect, in the array, the rows or columns representative of the output channels of the first, convolution, layer to the rows or columns representative of the input channels of the second, fully connected, layer by considering the receptive window of the input tensor shape.

In step S1112, the rows and/or columns of the array are rearranged (e.g. reordered). By performing step S1112 for the array, each of the matrices comprised by the array can be simultaneously rearranged. By performing step S1112, the plurality of elements representative of non-zero values comprised by the first matrix or the transposed first matrix (depending on how the array has been formed) are gathered into a first one or more sub-matrices, the first one or more sub-matrices having a greater number of elements representative of non-zero values per total number of elements of the first one or more sub-matrices than the number of elements representative of non-zero values per total number of elements of the first matrix. In other words, the "non-zero density" of the first one or more sub-matrices, as a whole, is greater than the "non-zero density" of the first matrix. Also, the plurality of elements representative of non-zero values comprised by the second matrix or the transposed second matrix (depending on how the array has been formed) are gathered into a second one or more sub-matrices, the second one or more sub-matrices having a greater number of elements representative of non-zero values per total number of elements of the second one or more sub-matrices than the number of elements representative of non-zero values per total number of elements of the second matrix. In other words, the "non-zero density" of the second one or more sub-matrices, as a whole, is greater than the "non-zero density" of the second matrix. Further, the plurality of elements representative of non-zero values comprised by the third matrix or the transposed third matrix (depending on how the array has been formed) are gathered into a third one or more sub-matrices, the third one or more sub-matrices having a greater number of elements representative of non-zero values per total number of elements of the third one or more sub-matrices than the number of elements representative of non-zero values per total number of elements of the third matrix. In other words, the "non-zero density" of the third one or more sub-matrices, as a whole, is greater than the "non-zero density" of the third matrix. Also, the plurality of elements representative of non-zero values comprised by the fourth matrix or the transposed fourth matrix (depending on how the array has been formed) are gathered into a fourth one or more sub-matrices, the fourth one or more sub-matrices having a greater number of elements representative of non-zero values per total number of elements of the fourth one or more sub-matrices than the number of elements representative of non-zero values per total number of elements of the fourth matrix. In other words, the "non-zero density" of the fourth one or more sub-matrices, as a whole, is greater than the "non-zero density" of the fourth matrix.

Each of the first one or more sub-matrices may have a greater number of elements representative of non-zero values per total number of elements of that first sub-matrix than the number of elements representative of non-zero values per total number of elements of the first matrix. In other words, the "non-zero density" of each and every first sub-matrix of the first one or more sub-matrices may be greater than the "non-zero density" of the first matrix - although this need not be the case. Each of the second one or more sub-matrices may have a greater number of elements representative of non-zero values per total number of elements of that second sub-matrix than the number of elements representative of non-zero values per total number of elements of the second matrix. In other words, the "non-zero density" of each and every second sub-matrix of the second one or more sub-matrices may be greater than the "non-zero density" of the second matrix - although this need not be the case. Each of the third one or more sub-matrices may have a greater number of elements representative of non-zero values per total number of elements of that third sub-matrix than the number of elements representative of non-zero values per total number of elements of the third matrix. In other words, the "non-zero density" of each and every third sub-matrix of the third one or more sub-matrices may be greater than the "non-zero density" of the third matrix - although this need not be the case. Each of the fourth one or more sub-matrices may have a greater number of elements representative of non-zero values per total number of elements of that fourth sub-matrix than the number of elements representative of non-zero values per total number of elements of the fourth matrix. In other words, the "non-zero density" of each and every fourth sub-matrix of the fourth one or more sub-matrices may be greater than the "non-zero density" of the fourth matrix - although this need not be the case.

Step S1112 can be performed for the array in an analogous way to step S506 is performed for a matrix as described herein. That is, step S1112 may comprise rearranging the rows and/or columns of the array in dependence on a hypergraph model. The hypergraph model may be formed in dependence on the respective row and column position of each of the plurality of elements representative of non-zero values within the array using the principles described herein. The hypergraph model may be a rownet hypergraph model. The hypergraph model may be a columnnet hypergraph model. The hypergraph model for the array may be partitioned using the principles described herein. The rows and/or columns of the array may be rearranged in dependence on the partitioned hypergraph model. It is to be understood that the use of a hypergraph model in step S1112 is not essential. For example, a hypergraph clustering algorithm or graph partitioning algorithm could alternatively be used in step S1112. The rearrangement of the rows and/or columns of the array may be constrained such that the rows and/or columns of each matrix within the array can only be rearranged to row or column positions within the range of rows and/or columns of the array that that matrix originally spanned. The at least one processor 404 shown in Figure 4 can be configured to perform step S1112.

Step S1112 can be understood with reference to Figure 13 - which shows an example rearranged array 1310. The rearranged array 1310 shown in Figure 13 can be formed by rearranging the rows and columns of the array 1200 shown in Figure 12. That is, Figure 13 shows the rows and columns of the array 1200 shown in Figure 12 in a different order. By rearranging the rows and columns of the array 1200 in this way, the rows and columns of each of: the transposed first matrix $(W_0)^T$ 1201-1; the second matrix $W_1$ 1200-2; the transposed third matrix $(W_2)^T$ 1201-3; and the fourth matrix $W_3$ 1200-4 are rearranged (e.g. simultaneously). Each of the rearranged matrices (i.e. the rearranged transposed first matrix 1311-1 for $(W_0)^T$, the rearranged second matrix 1310-2 for $W_1$, the rearranged transposed third matrix 1311-3 for $(W_2)^T$, and the rearranged fourth matrix 1310-4 for $W_3$) comprises a plurality of sub-matrices, into which the plurality of its elements representative of non-zero values have been gathered. Each of the matrices (i.e. $(W_0)^T$, $W_1$, $(W_2)^T$, $W_3$) shown in Figure 13 has been converted into bordered block matrix form. In particular, in Figure 13, each of the matrices (i.e. $(W_0)^T$, $W_1$, $(W_2)^T$, $W_3$) has been converted into singly-bordered block-diagonal matrix form. This can be achieved by rearranging the rows and columns of the array 1200 of Figure 12 in dependence on a columnnet hypergraph model as described herein. A columnnet hypergraph model formed for the array 1200 of Figure 12 and partitioned using the principles described herein can be used to convert each of the matrices, individually, into singly-bordered block-diagonal matrix form.

Forming the array as described herein in step S1110 such that series of elements (e.g. rows or columns) representative of the one or more output channels of the first layer are aligned with (i.e. included within the same rows or columns of the array as) the series of elements (e.g. rows or columns) representative of the one or more corresponding input channels of the second, subsequent layer, means that, when the rows and/or columns of that array are rearranged (e.g. reordered) in step S1112, the series of elements (e.g. row or column) representative of each output channel of the first layer remains aligned with (i.e. included within the same row or column of the array as) the series of elements (e.g. row or column) representative of the respective, corresponding, input channel of the second, subsequent layer. This enables the output-input dependencies between the first layer and the second layer to be preserved through step S1112. More generally, by applying these principles to form and rearrange an array, the output-input dependencies between each pair of adjacent layers of a series of two or more adjacent layers for which the method described with reference to Figure 11 is performed can be preserved.

Returning to Figure 11, in step S1114, a compressed neural network is output comprising a first compressed layer arranged to perform a first compressed operation in dependence on the first one or more sub-matrices and a second, subsequent, compressed layer arranged to perform a second compressed operation in dependence on the second one or more sub-matrices. The at least one processor 404 shown in Figure 4 can be configured to perform step S1114. The compressed neural network may also comprise a third compressed layer arranged to perform a third compressed operation in dependence on the third one or more sub-matrices. The compressed neural network may also comprise a fourth compressed layer arranged to perform a fourth compressed operation in dependence on the fourth one or more sub-matrices.

The first compressed layer is arranged to perform the same type of operation that the first layer is arranged to perform. That said, the first compressed layer is arranged to perform that type of operation in dependence on the first one or more sub-matrices, e.g. rather than performing that type of operation in dependence on the first matrix. The manner in which the first compressed layer can be arranged to perform the first compressed operation in dependence on the first one or more sub-matrices can be understood with reference to the description herein of step S508. The second compressed layer is arranged to perform the same type of operation that the second layer is arranged to perform. That said, the second compressed layer is arranged to perform that type of operation in dependence on the second one or more sub-matrices, e.g. rather than performing that type of operation in dependence on the second matrix. The manner in which the second compressed layer can be arranged to perform the second compressed operation in dependence on the second one or more sub-matrices can be understood with reference to the description herein of step S508. Analogously, the (optional) third compressed layer can be arranged to perform the same type of operation that the third layer is arranged to perform. That said, the third compressed layer can be arranged to perform that type of operation in dependence on the third one or more sub-matrices, e.g. rather than performing that type of operation in dependence on the third matrix. The manner in which the third compressed layer can be arranged to perform the third compressed operation in dependence on the third one or more sub-matrices can be understood with reference to the description herein of step S508. Analogously, the (optional) fourth compressed layer can be arranged to perform the same type of operation that the fourth layer is arranged to perform. That said, the fourth compressed layer can be arranged to perform that type of operation in dependence on the fourth one or more sub-matrices, e.g. rather than performing that type of operation in dependence on the fourth matrix. The manner in which the fourth compressed layer can be arranged to perform the fourth compressed operation in dependence on the fourth one or more sub-matrices can be understood with reference to the description herein of step S508.

The method of compressing a neural network as described herein with reference to Figure 11 is advantageous for all of the same reasons as the method of compressing a neural network as described herein with reference to Figure 5. The method of compressing a neural network as described herein with reference to Figure 11 is further advantageous because the output of the first compressed layer of the two or more adjacent layers can be input directly (e.g. without need for any intermediate rearrangement, such as a gather or scatter operation) into the second, subsequent, compressed layer of that pair of adjacent layers. This is because, by performing steps S1100 and S1112 as described herein, the output-input dependencies between those adjacent layers are preserved. Similarly, the output of the second compressed layer of the two or more adjacent layers can be input directly (e.g. without need for any intermediate rearrangement, such as a gather or scatter operation) into the third, subsequent, compressed layer; and the output of the third compressed layer of the two or more adjacent layers can be input directly (e.g. without need for any intermediate rearrangement, such as a gather or scatter operation) into the fourth, subsequent, compressed layer; and so on for series of more than four layers that are compressed in accordance with the method of Figure 11.

For example, considering only the first and second layers from here on, in the first example, the first layer and the second layer may both be fully connected layers - or any other type of layer arranged to perform matrix multiplication.

In the first example, the first layer of the received neural network may be arranged to perform the first operation by performing a matrix multiplication using the first matrix comprising the set of coefficients of the first layer and a first input matrix comprising a set of input activation values of the first layer. The compressed neural network can be configured such that the first compressed layer is arranged to perform the first compressed operation by performing one or more matrix multiplications using the one or more subsets of the set of coefficients of the first layer comprised by the first one or more sub-matrices and one or more first input sub-matrices each comprising a respective subset of the set of input activation values of the first layer. Also in the first example, the second layer of the received neural network may be arranged to perform the second operation by performing a matrix multiplication using the second matrix comprising the set of coefficients of the second layer and a second input matrix comprising a set of input activation values of the second layer. The compressed neural network is configured such that the second compressed layer is arranged to perform the second compressed operation by performing one or more matrix multiplications using the one or more subsets of the set of coefficients of the second layer comprised by the second one or more sub-matrices and one or more second input sub-matrices each comprising a respective subset of the set of input activation values of the second layer.

In the first example, in step S1114, the first compressed layer can be arranged to perform the first compressed operation so as to form one or more first output sub-matrices comprising a set of output activation values of the first compressed layer, where the one or more first output sub-matrices of the first compressed layer are the one or more second input sub-matrices of the second compressed layer. That is, in step S1114, there may be no need to include a scatter layer (e.g. as described herein) subsequent to the first compressed layer, or a gather layer (e.g. as described herein) prior to the second compressed layer within the compressed neural network. This is because, by performing steps S1100 and S1112 as described herein so as preserve the output-input dependencies between adjacent layers, the output of the first compressed layer can be input directly (i.e. without need for any intermediate rearrangement) into the second compressed layer.

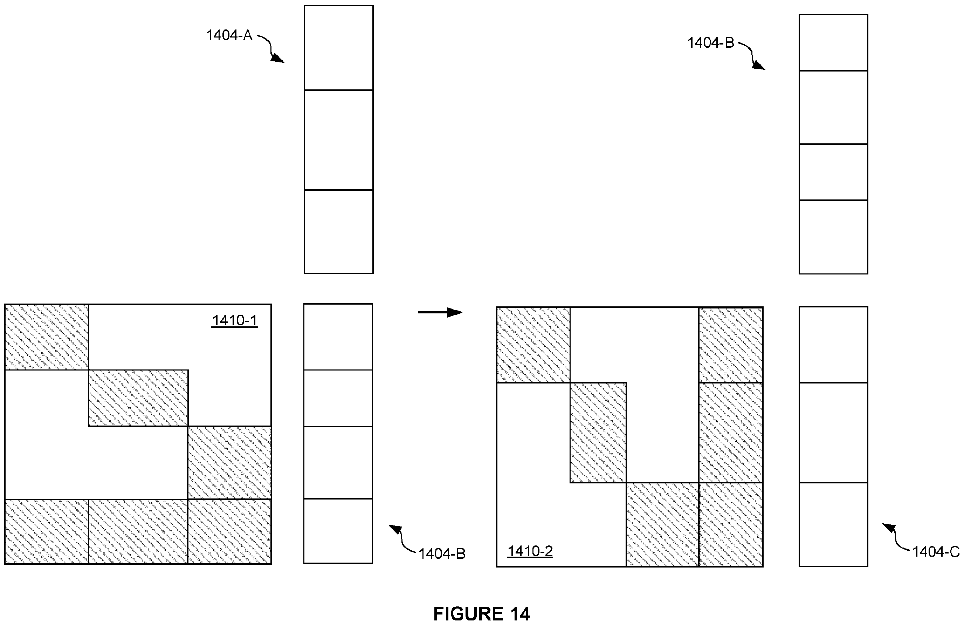

This can be understood with reference to Figure 14 - which shows the output activation values formed by a first compressed layer in dependence on a plurality of sub-matrices being used as the input activation values of a second, subsequent, compressed layer. Figure 14 shows a first rearranged matrix 1410-1 comprising a first plurality of sub-matrices. The first rearranged matrix 1410-1 may be obtained by transposing the rearranged transposed first matrix 1311-1 shown in Figure 13. To perform the first compressed operation, a set of matrix multiplications can be performed between the sub-matrices of the first rearranged matrix 1410-1 and the plurality of input sub-matrices 1404-A so as to form a plurality of output sub-matrices 1404-B - e.g. as described herein with reference to Figure 9. As shown in Figure 14, the plurality of output sub-matrices 1404-B output by the first compressed layer are in the correct format to be directly input to (i.e. without need for any intermediate gather or scatter operation) to the second compressed layer as a plurality of input sub-matrices 1404-B. Figure 14 shows a second rearranged matrix 1410-2 comprising a second plurality of sub-matrices. The second rearranged matrix 1410-2 may be the rearranged second matrix 1310-2 shown in Figure 13. To perform the second compressed operation, a set of matrix multiplications can be performed between the sub-matrices of the second rearranged matrix 1410-2 and the plurality of input sub-matrices 1404-B so as to form a plurality of output sub-matrices 1404-C - e.g. as described herein with reference to Figure 10.

Alternatively, again considering only the first and second layers from here on, in the second example, the first layer and the second layer may both be convolution layers.

In the second example, the first convolution layer of the received neural network may be arranged to perform the first operation by convolving a set of input activation values of the first convolution layer with the set of coefficients of the first convolution layer. Each of the first one or more sub-matrices comprise a plurality of elements representative of a respective subset of the input channels of the filters of the set of coefficients of the first convolution layer. The compressed neural network can be configured such that the first compressed layer is arranged to perform the first compressed operation by convolving one or more subsets of input activation values of the first convolution layer with the subsets of the set of coefficients of the first convolution layer comprised by the one or more subsets of the input channels of the filters represented by elements in the first one or more sub-matrices. Also in the second example, the second convolution layer of the received neural network may be arranged to perform the second operation by convolving a set of input activation values of the second convolution layer with the set of coefficients of the second convolution layer. Each of the second one or more sub-matrices comprise a plurality of elements representative of a respective subset of the input channels of the filters of the set of coefficients of the second convolution layer. The compressed neural network may be configured such that the second compressed layer is arranged to perform the second compressed operation by convolving one or more subsets of input activation values of the second convolution layer with the subsets of the set of coefficients of the second convolution layer comprised by the one or more subsets of the input channels of the filters represented by elements in the one or more sub-matrices.

In the second example, in step S1114, the first compressed layer can be arranged to perform the first compressed convolution operations so as to form one or more subsets of output activation data of the first compressed layer, where the one or more subsets of output activation data of the first compressed layer are the one or more subsets of input activation data of the second compressed layer. That is, in step S1114, there may be no need to include a scatter layer (e.g. as described herein) subsequent to the first compressed layer, or a gather layer (e.g. as described herein) prior to the second compressed layer within the compressed neural network. This is because, by performing steps S1100 and S1112 as described herein so as preserve the output-input dependencies between adjacent layers, the output of the first compressed layer can be input directly (i.e. without need for any intermediate rearrangement) into the second compressed layer.

For example, the first compressed convolution layer may be arranged to perform the first compressed convolution operation in dependence on Equations (5) and (6) as described herein, so as to form a plurality of subsets of output activation data (e.g. subsets of output activation data $Y_1$, $Y_2$, $Y_3$, $Y_4$). The second compressed convolution layer can be arranged to perform the second compressed convolution operation in dependence on Equations (7) and (8) as described herein, using the plurality of subsets of output activation data output by the first compressed convolution layer (e.g. subsets of output activation data $Y_1$, $Y_2$, $Y_3$, $Y_4$) as the plurality of subsets of input activation data (e.g. subsets of input activation data $X_1$, $X_2$, $X_3$, $X_4$) of the second compressed convolution layer.

Step S1114 may comprise storing the compressed neural network for subsequent implementation. For example, referring to Figure 4, the at least one processor 404 may write the compressed neural network into memory 406 for subsequent implementation. Step S1114 may comprise outputting a computer readable description of the compressed neural network that, when implemented at a system for implementing a neural network (e.g. system 300 shown in Figure 3), causes the compressed neural network to be executed. Step S1114 may comprise configuring a system for implementing a neural network to implement the compressed neural network.

Step S1114 may comprise configuring hardware logic to implement the compressed neural network. The hardware logic may comprise a neural network accelerator. For example, referring to Figure 4, the at least one processor 404 may be configured to configure hardware logic comprised by the system 300 for implementing a neural network to implement the compressed neural network.

The compressed neural network output in step S1114 may be used. The compressed neural network output in step S1114 may be used to perform image processing. By way of non-limiting example, the compressed neural network may be used to perform one or more of image super-resolution processing, semantic image segmentation processing and object detection. For example, performing image super-resolution processing involves the compressed neural network processing a lower-resolution image input to the neural network in order to output a higher-resolution image.

In the example shown in Figures 12 and 13, the method of Figure 11 is performed for a series of four adjacent layers, including: a third layer of the received neural network that is adjacent to, and subsequent to, the second layer; and a fourth layer of the received neural network that is adjacent to, and subsequent to, the third layer. This need not be the case. Generally, the greater the number of matrices included within the array to be rearranged in step S1112, the more constrained the rearrangement process is and so the lesser the "non-zero density" gains are for each matrix comprised by that array. Thus, one or more sets of adjacent layers of the received neural network may be selected for compression as described herein with reference to Figure 11 by forming and rearranging a separate array per set of adjacent layers, with other layers "interspersed" between those sets of adjacent layers that are rearranged in an alternative manner in dependence on the outcome of step S1112 of Figure 11, as described in the following.

In the following, two examples are given where the method of Figure 11 is performed for the first layer and the second layer as described herein, but is not performed for the third layer and the fourth layer as described herein. In these examples, a first interspersed layer, subsequent to the second layer, (e.g. the previously described third layer) and a second interspersed layer, prior to the first layer, have not been rearranged in accordance with the method of Figure 11. The first interspersed layer and/or the second interspersed layer can be rearranged in an alternative manner in dependence on the outcome of step S1112 of Figure 11 for the first and second layer.

For example, a first interspersed layer of the received neural network can be selected, the first interspersed layer being subsequent to and adjacent to the second layer within the received neural network. The first interspersed layer of the received neural network may be arranged to perform a first interspersed operation. The first interspersed layer may have one or more input channels corresponding to the one or more output channels of the second layer. The second layer and the first interspersed layer may both be arranged to perform the same type of operation. In the first example, the second layer and the first interspersed layer may both be fully connected layers. In the second example, the second layer and the first interspersed layer may both be convolution layers.

A first interspersed matrix representative of a set of coefficients of the first interspersed layer can be determined. The first interspersed matrix may comprise a plurality of elements representative of non-zero values and a plurality of elements representative of zero values. The first interspersed matrix may be determined for the first interspersed layer in an analogous way to a matrix is determined for the selected layer in step S504 of Figure 5 as described herein. The one or more rows or columns of the first interspersed matrix may be representative of the one or more input channels of the first interspersed layer.

A rearranged second matrix can be determined from the rearranged array formed in step S1112 of Figure 11. The rearranged second matrix may be determined by, either: identifying the rearranged second matrix within the rearranged array (e.g. in examples where the array is formed comprising the second matrix); or identifying the rearranged transposed second matrix within the rearranged array (e.g. in examples where the array is formed comprising the transposed second matrix) and transposing the rearranged transposed second matrix.

The rows or columns of the first interspersed matrix can be rearranged (e.g. reordered) such that one or more rows or columns of the first interspersed matrix being representative of the one or more input channels of the first interspersed layer are in an order that corresponds with the order of the one or more rows or columns of the rearranged second matrix being representative of the one or more output channels of the second layer. That is, the rows or columns of the first interspersed matrix need not be rearranged with the aim of gathering the plurality of elements representative of non-zero values comprised by the first interspersed matrix into one or more sub-matrices. Instead, the rows or columns of the first interspersed matrix can be rearranged (e.g. reordered) such that, for 1 to $N$, the $N^{th}$ row or column of the first interspersed matrix is representative of the input channel of the set of coefficients of the first interspersed layer that is responsible for operating on the channel of output activation data formed by the output channel of the set of coefficients of the second layer that is represented by the $N^{th}$ row or column of the rearranged second matrix.

The compressed neural network can be output comprising a first interspersed layer arranged to perform the first interspersed operation in dependence on the rearranged first interspersed matrix. Rearranging the rows or columns of the first interspersed matrix as described herein is advantageous because the output of the second compressed layer can be input directly (e.g. without need for any intermediate rearrangement, such as a gather or scatter operation) into the first interspersed layer. This is because, by rearranging the rows or columns of the first interspersed matrix as described herein, the output-input dependencies between the second and first interspersed layers are preserved.

The first interspersed layer of the received neural network may be selected for this alternative manner of rearrangement in dependence on the number of elements representative of non-zero values per total number of elements of the first interspersed matrix exceeding a threshold. In other words, when the "non-zero density" of the first interspersed matrix exceeds a "non-zero density" threshold. This is because one or more sub-matrices formed by gathering the plurality of elements representative of non-zero values within a matrix that already has a high "non-zero density" may not have a significantly (if at all) higher "non-zero value density" than the matrix itself.

Alternatively, one or more layers (e.g. including said first interspersed layer) of the received neural network may be randomly selected, or selected according to a predetermined pattern (e.g. every $N^{th}$ layer), for this alternative manner of rearrangement so as to reduce the constraints on the rearrangement step S1112 of Figure 11.

Similarly, a second interspersed layer of the received neural network can be selected, the second interspersed layer being prior to and adjacent to the first layer within the received neural network. The second interspersed layer of the received neural network may be arranged to perform a second interspersed operation. The second interspersed layer may have one or more output channels corresponding to the one or more input channels of the first layer. The second interspersed layer and the first layer may both be arranged to perform the same type of operation. In the first example, the second interspersed layer and the first layer may both be fully connected layers. In the second example, the second interspersed layer and the first layer may both be convolution layers.

A second interspersed matrix representative of a set of coefficients of the second interspersed layer can be determined. The second interspersed matrix may comprise a plurality of elements representative of non-zero values and a plurality of elements representative of zero values. The second interspersed matrix may be determined for the second interspersed layer in an analogous way to a matrix is determined for the selected layer in step S504 of Figure 5 as described herein. The one or more rows or columns of the second interspersed matrix may be representative of the one or more output channels of the second interspersed layer.

A rearranged first matrix can be determined from the rearranged array formed in step S1112 of Figure 11. The rearranged first matrix may be determined by, either: identifying the rearranged first matrix within the rearranged array (e.g. in examples where the array is formed comprising the first matrix); or identifying the rearranged transposed first matrix within the rearranged array (e.g. in examples where the array is formed comprising the transposed first matrix) and transposing the rearranged transposed first matrix.

The rows or columns of the second interspersed matrix can be rearranged (e.g. reordered) such that one or more rows or columns of the second interspersed matrix being representative of the one or more output channels of the second interspersed layer are in an order that corresponds with the order of the one or more columns or rows of the rearranged first matrix being representative of the one or more input channels of the first layer. That is, the rows or columns of the second interspersed matrix need not be rearranged with the aim of gathering the plurality of elements representative of non-zero values comprised by the second interspersed matrix into one or more sub-matrices. Instead, the rows or columns of the second interspersed matrix can be rearranged (e.g. reordered) such that, for 1 to $N$, the $N^{th}$ row or column of the second interspersed matrix is representative of the output channel of the set of coefficients of the second interspersed layer that is responsible for forming the channel of output activation data that will be operated on by the input channel of the set of coefficients of the first layer that is represented by the $N^{th}$ column or row of the rearranged first matrix.

The compressed neural network can be output comprising a second interspersed layer arranged to perform the second interspersed operation in dependence on the rearranged second interspersed matrix. Rearranging the rows or columns of the second interspersed matrix as described herein is advantageous because the output of the second interspersed layer can be input directly (e.g. without need for any intermediate rearrangement, such as a gather or scatter operation) into the first compressed layer. This is because, by rearranging the rows or columns of the second interspersed matrix as described herein, the output-input dependencies between the second interspersed and first layers are preserved.

The second interspersed layer of the received neural network may be selected for this alternative manner of rearrangement in dependence on the number of elements representative of non-zero values per total number of elements of the second interspersed matrix exceeding a threshold. In other words, when the "non-zero density" of the second interspersed matrix exceeds a "non-zero density" threshold. This is because one or more sub-matrices formed by gathering the plurality of elements representative of non-zero values within a matrix that already has a high "non-zero density" may not have a significantly (if at all) higher "non-zero value density" than the matrix itself.

Alternatively, one or more layers (e.g. including said second interspersed layer) of the received neural network may be randomly selected, or selected according to a predetermined pattern (e.g. every $N^{th}$ layer), for this alternative manner of rearrangement so as to reduce the constraints on the rearrangement step S1112 of Figure 11.

It is to be understood that one layer of the received neural network may have its input channels rearranged (e.g. as described herein with reference to the first interspersed matrix) so as to correspond with the output channels of a prior adjacent layer that has been subject to the method of Figure 11 or Figure 5, and its output channels rearranged (e.g. as described herein with reference to the second interspersed matrix) so as to correspond with the input channels of a subsequent adjacent layer that has been subject to the method of Figure 11 or Figure 5. In this way, one or more sets of adjacent layers of the received neural network may be selected for compression as described herein with reference to Figure 11 by forming and rearranging a separate array per set of adjacent layers, with other layers "interspersed" between those sets of adjacent layers that are rearranged in the alternative manner described herein in dependence on the outcome of step S1112 of Figure 11 (and/or the outcome of step S506 of Figure 5).

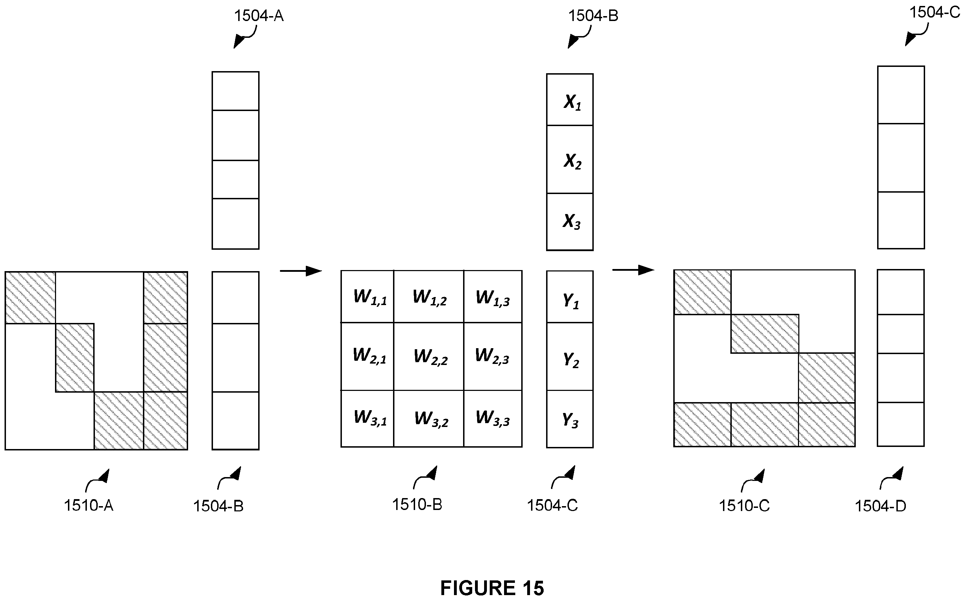

For example, Figure 15 shows fully connected operations performed by three adjacent layers of a compressed neural network according to the principles described herein. The first layer is arranged to perform a first compressed operation, the second (e.g. interspersed) layer is arranged to perform a second interspersed operation, and the third layer is arranged to perform a third compressed operation. Figure 15 shows a first rearranged matrix 1510-A (e.g. rearranged in accordance with step S506 of Figure 5 or step S1112 of Figure 11). To perform the first compressed operation, a set of matrix multiplications can be performed between the sub-matrices of the first rearranged matrix 1510-A and the plurality of input sub-matrices 1504-A so as to form a plurality of output sub-matrices 1504-B - e.g. as described herein with reference to Figure 9. The plurality of output sub-matrices 1504-B output by the first compressed layer are in the correct format to be directly input to (i.e. without need for any intermediate gather or scatter operation) to the second (e.g. interspersed) layer as a plurality of input sub-matrices 1504-B, labelled in Figure 15 as $X_1$, $X_2$ and $X_3$. Figure 15 shows a second rearranged matrix 1510-B that has had its columns that are representative of the one or more input channels of the second layer reordered to correspond with the row order of first rearranged matrix 1510-A that are representative of the one or more output channels of the first layer, and its rows that are representative of the one or more output channels of the second layer reordered so as to correspond with the column order of the third rearranged matrix 1510-C that are representative of the one or more input channels of the third layer. To perform the second interspersed operation, a set of matrix multiplications can be performed between blocks of coefficients of the second rearranged matrix 1510-B, labelled in Figure 15 as $W_{1,1}$, $W_{1,2}$, $W_{1,3}$, $W_{2,1}$, $W_{2,2}$, $W_{2,3}$, $W_{3,1}$, $W_{3,2}$ and $W_{3,3}$. and the plurality of input sub-matrices 1504-B, labelled in Figure 15 as $X_1$, $X_2$ and $X_3$, so as to form a plurality of output sub-matrices 1504-C, labelled in Figure 15 as $Y_1$, $Y_2$ and $Y_3$. The blocks of coefficients $W_{1,1}$, $W_{2,1}$, $W_{3,1}$ may comprise a number of columns equal to the number of rows comprised by the input sub-matrix $X_1$. The blocks of coefficients $W_{1,2}$, $W_{2,2}$, $W_{3,2}$ may comprise a number of columns equal to the number of rows comprised by the input sub-matrix $X_2$. The blocks of coefficients $W_{1,3}$, $W_{2,3}$, $W_{3,3}$ may comprise a number of columns equal to the number of rows comprised by the input sub-matrix $X_3$. The blocks of coefficients $W_{1,1}$, $W_{1,2}$, $W_{1,3}$ may comprise a number of rows equal to the number of rows comprised by the output sub-matrix $Y_1$. The blocks of coefficients $W_{2,1}$, $W_{2,2}$, $W_{2,3}$ may comprise a number of rows equal to the number of rows comprised by the output sub-matrix $Y_2$. The blocks of coefficients $W_{3,1}$, $W_{3,2}$, $W_{3,3}$ may comprise a number of rows equal to the number of rows comprised by the output sub-matrix $Y_3$. For example, the second interspersed operation could be performed in accordance with the following general equation, where $K_X$ denotes the number of subsets of input data $X$, and $K_Y$ denotes the number of subsets in output data Y:

$$Y_i = \sum_{j=1}^{j=K_Y} W_{i,j} X_j \ \text{ for each } i = 1,2 \dots K_X \qquad (9)$$

The plurality of output sub-matrices 1504-C output by the second (e.g. interspersed) layer, labelled in Figure 15 as $Y_1$, $Y_2$ and $Y_3$, are in the correct format to be directly input to (i.e. without need for any intermediate gather or scatter operation) to the third compressed layer as a plurality of input sub-matrices 1504-C. Figure 15 shows a third rearranged matrix 1510-C (e.g. rearranged in accordance with step S506 of Figure 5 or step S1112 of Figure 11). To perform the third compressed operation, a set of matrix multiplications can be performed between the sub-matrices of the third rearranged matrix 1510-C and the plurality of input sub-matrices 1504-C so as to form a plurality of output sub-matrices 1504-D - e.g. as described herein with reference to Figure 10.

It will also be understood that the skilled person would have no difficulty applying the principles described herein with reference to Figure 15 to interspersing a convolution layer that is rearranged in the alternative manner described herein between two convolution layers that have been compressed in accordance with the method of Figure 5 or Figure 11.

There is a synergy between the methods of compressing a neural network described herein and the implementation of the compressed neural network in hardware - i.e. by configuring hardware logic comprising a neural network accelerator (NNA) to implement that compressed neural network. This is because the method of compressing the neural network is intended to improve the implementation of the compressed neural network at a system in which the set of coefficients will be stored in an off-chip memory and the layers of the compressed neural network will be executed by reading, at run-time, those sets of coefficients in from that off-chip memory into hardware logic comprising a neural network accelerator (NNA). That is, the methods described herein are particularly advantageous when used to compress a neural network for implementation in hardware.

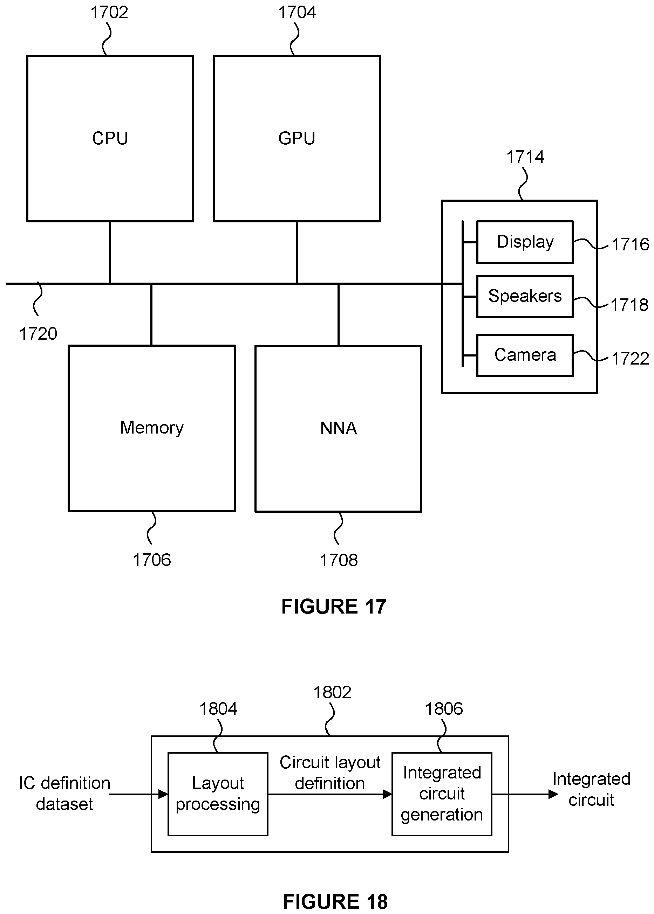

Figure 17 shows a computer system in which the neural network systems described herein may be implemented. The computer system comprises a CPU 1702, a GPU 1704, a memory 1706 (e.g. equivalent to memory 304 shown in Figure 3), a neural network accelerator (NNA) 1708 (e.g. equivalent to neural network accelerator (NNA) 302 shown in Figure 3), and other devices 1714, such as a display 1716, speakers 1718 and a camera 1722 (e.g. equivalent to input 301 shown in Figure 3). In some examples, the camera 1722 may input activation data directly into the neural network accelerator (NNA) 1708. In some examples, the NNA may be a GPU with one or more hardware accelerators for accelerating one or more neural network operations. It is to be understood that one or more of the depicted components may be omitted from the system. The components of the computer system can communicate with each other via a communications bus 1720.

The systems of Figures 3, 4 and 17 are shown as comprising a number of functional blocks. This is schematic only and is not intended to define a strict division between different logic elements of such entities. Each functional block may be provided in any suitable manner. It is to be understood that intermediate values described herein as being formed by the at least one processor need not be physically generated by the at least one processor at any point and may merely represent logical values which conveniently describe the processing performed by the at least one processor between its input and output.

The processing system described herein may be embodied in hardware on an integrated circuit. The processing system described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing system configured to perform any of the methods described herein, or to manufacture a processing system comprising any apparatus described herein. An integrated circuit definition dataset may be, for example, an integrated circuit description.

Therefore, there may be provided a method of manufacturing, at an integrated circuit manufacturing system, a processing system as described herein. Furthermore, there may be provided an integrated circuit definition dataset that, when processed in an integrated circuit manufacturing system, causes the method of manufacturing a processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processing system will now be described with respect to Figure 18.

Figure 18 shows an example of an integrated circuit (IC) manufacturing system 1802 which is configured to manufacture a processing system as described in any of the examples herein. In particular, the IC manufacturing system 1802 comprises a layout processing system 1804 and an integrated circuit generation system 1806. The IC manufacturing system 1802 is configured to receive an IC definition dataset (e.g. defining a processing system as described in any of the examples herein), process the IC definition dataset, and generate an IC according to the IC definition dataset (e.g. which embodies a processing system as described in any of the examples herein). The processing of the IC definition dataset configures the IC manufacturing system 1802 to manufacture an integrated circuit embodying a processing system as described in any of the examples herein.

The layout processing system 1804 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1804 has determined the circuit layout it may output a circuit layout definition to the IC generation system 1806. A circuit layout definition may be, for example, a circuit layout description.

The IC generation system 1806 generates an IC according to the circuit layout definition, as is known in the art. For example, the IC generation system 1806 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1806 may be in the form of computer-readable code which the IC generation system 1806 can use to form a suitable mask for use in generating an IC.

The different processes performed by the IC manufacturing system 1802 may be implemented all in one location, e.g. by one party. Alternatively, the IC manufacturing system 1802 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 18 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 18, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

### Claims

1.   A computer implemented method of compressing a neural network, the method comprising:

receiving a neural network;

selecting two or more adjacent layers of the received neural network, each of said two or more adjacent layers having one or more input channels and one or more output channels, the one or more output channels of a first layer of the two or more adjacent layers corresponding to the one or more input channels of a second, subsequent, layer of the two or more adjacent layers, the first layer being arranged to perform a first operation and the second layer being arranged to perform a second operation;

determining a first matrix representative of a set of coefficients of the first layer of the received neural network, the first matrix comprising a plurality of elements representative of non-zero values and a plurality of elements representative of zero values, the one or more rows or columns of the first matrix being representative of the one or more output channels of the first layer and the one or more other of the rows or columns of the first matrix being representative of the one or more input channels of the first layer;

determining a second matrix representative of a set of coefficients of the second layer of the received neural network, the second matrix comprising a plurality of elements representative of non-zero values and a plurality of elements representative of zero values, the one or more rows or columns of the second matrix being representative of the one or more output channels of the second layer and the one or more other of the rows or columns of the second matrix being representative of the one or more input channels of the second layer;

forming an array by, one of:

transposing the first matrix and forming the array comprising the transposed first matrix and the second matrix by aligning the columns or rows of the transposed first matrix that are representative of the one or more output channels of the first layer with the columns or rows of the second matrix that are representative of the one or more input channels of the second layer; or

transposing the second matrix and forming the array comprising the transposed second matrix and the first matrix by aligning the rows or columns of the transposed second matrix that are representative of the one or more input channels of the second layer with the rows or columns of the first matrix that are representative of the one or more output channels of the first layer; or

forming the array comprising the first matrix and the second matrix by aligning the rows or columns of the first matrix that are representative of the one or more output channels of the first layer with the rows or columns of the second matrix that are representative of the one or more input channels of the second layer;

rearranging the rows and/or columns of the array so as to:

gather the plurality of elements representative of non-zero values comprised by the first matrix or the transposed first matrix into a first one or more sub-matrices, the first one or more sub-matrices having a greater number of elements representative of non-zero values per total number of elements of the first one or more sub-matrices than the number of elements representative of non-zero values per total number of elements of the first matrix; and
gather the plurality of elements representative of non-zero values comprised by the second matrix or the transposed second matrix into a second one or more sub-matrices, the second one or more sub-matrices having a greater number of elements representative of non-zero values per total number of elements of the second one or more sub-matrices than the number of elements representative of non-zero values per total number of elements of the second matrix; and

outputting a compressed neural network comprising a first compressed layer arranged to perform a first compressed operation in dependence on the first one or more sub-matrices and a second, subsequent, compressed layer arranged to perform a second compressed operation in dependence on the second one or more sub-matrices.

2. The method of claim 1, wherein:

the first matrix comprises the set of coefficients of the first layer, the plurality of elements representative of non-zero values are a plurality of non-zero coefficients, the plurality of elements representative of zero values are a plurality of zero coefficients, and the one or more first sub-matrices comprise a subset of the set of coefficients of the first layer; and/or
the second matrix comprises the set of coefficients of the second layer, the plurality of elements representative of non-zero values are a plurality of non-zero coefficients, the plurality of elements representative of zero values are a plurality of zero coefficients, and the one or more second sub-matrices comprise a subset of the set of coefficients of the second layer.

3. The method of claim 2, wherein:

the first layer of the received neural network is arranged to perform the first operation by performing a matrix multiplication using the first matrix comprising the set of coefficients of the first layer and a first input matrix comprising a set of input activation values of the first layer, and the compressed neural network is configured such that the first compressed layer is arranged to perform the first compressed operation by performing one or more matrix multiplications using the one or more subsets of the set of coefficients of the first layer comprised by the first one or more sub-matrices and one or more first input sub-matrices each comprising a respective subset of the set of input activation values of the first layer; and/or
the second layer of the received neural network is arranged to perform the second operation by performing a matrix multiplication using the second matrix comprising the set of coefficients of the second layer and a second input matrix comprising a set of input activation values of the second layer, and the compressed neural network is configured such that the second compressed layer is arranged to perform the second compressed operation by performing one or more matrix multiplications using the one or more subsets of the set of coefficients of the second layer comprised by the second one or more sub-matrices and one or more second input sub-matrices each comprising a respective subset of the set of input activation values of the second layer.

4. The method of claim 3, wherein the first compressed layer is arranged to perform the first compressed operation so as to form one or more first output sub-matrices each comprising a respective subset of output activation values of the first compressed layer, the one or more first output sub-matrices of the first compressed layer being the one or more second input sub-matrices.

5. The method of claim 1, wherein the first layer of the received neural network is a first convolution layer comprising a set of coefficients arranged in one or more filters, each of the one or more filters arranged in one or more input channels, each input channel of each filter comprising a respective subset of the set of coefficients of the first convolution layer, and wherein determining the first matrix comprises:
for each input channel of each filter:
determining whether that input channel of that filter comprises a non-zero coefficient; and

in response to determining that that input channel of that filter comprises at least one non-zero coefficient, representing that input channel of that filter with an element representative of a non-zero value in the first matrix; or
in response to determining that that input channel of that filter comprises exclusively zero coefficients, representing that input channel of that filter with an element representative of a zero value in the first matrix.

6. The method of claim 5, wherein:

the first convolution layer of the received neural network is arranged to perform the first operation by convolving a set of input activation values of the first convolution layer with the set of coefficients of the first convolution layer; the first one or more sub-matrices comprise a plurality of elements representative of a subset of the input channels of the filters of the set of coefficients of the first convolution layer; and
the compressed neural network is configured such that the first compressed layer is arranged to perform the first compressed operation by convolving one or more subsets of input activation values of the first convolution layer with the subsets of the set of coefficients of the first convolution layer comprised by the one or more subsets of the input channels of the filters represented by elements in the first one or more sub-matrices.

7. The method of claim 1,5 or 6, wherein the second layer of the received neural network is a second convolution layer comprising a set of coefficients arranged in one or more filters, each of the one or more filters arranged in one or more input channels, each input channel of each filter comprising a respective subset of the set of coefficients of the second convolution layer, and wherein determining the second matrix comprises:
for each input channel of each filter:
determining whether that input channel of that filter comprises a non-zero coefficient; and

in response to determining that that input channel of that filter comprises at least one non-zero coefficient, representing that input channel of that filter with an element representative of a non-zero value in the second matrix; or
in response to determining that that input channel of that filter comprises exclusively zero coefficients, representing that input channel of that filter with an element representative of a zero value in the second matrix.

8. The method of claim 7, wherein:

the second convolution layer of the received neural network is arranged to perform the second operation by convolving a set of input activation values of the second convolution layer with the set of coefficients of the second convolution layer;
the second one or more sub-matrices comprise a plurality of elements representative of a subset of the input channels of the filters of the set of coefficients of the second convolution layer; and
the compressed neural network is configured such that the second compressed layer is arranged to perform the second compressed operation by convolving one or more subsets of input activation values of the second convolution layer with the subsets of the set of coefficients of the second convolution layer comprised by the one or more subsets of the input channels of the filters represented by elements in the one or more sub-matrices.

9. The method of claim 8 when dependent on claim 6, wherein the first compressed layer is arranged to perform the first compressed operation so as to form one or more subsets of output activation values of the first compressed layer, the one or more subsets of output activation values of the first compressed layer being the one or more subsets of input activation values of the second compressed layer.

10. The method of any preceding claim, further comprising storing the compressed neural network for subsequent implementation.

11. The method of any preceding claim, further comprising outputting a computer readable description of the compressed neural network that, when implemented at a system for implementing a neural network, causes the compressed neural network to be executed.

12. The method of any preceding claim, further comprising configuring hardware logic to implement the compressed neural network, optionally wherein the hardware logic comprises a neural network accelerator.

**13.** The method of any preceding claim, wherein:

the one or more rows of the first matrix are representative of the one or more output channels of the first layer, the one or more columns of the first matrix are representative of the one or more input channels of the first layer, the one or more rows of the second matrix are representative of the one or more output channels of the second layer, and the one or more columns of the second matrix are representative of the one or more input channels of the second layer; or

the one or more columns of the first matrix are representative of the one or more output channels of the first layer, the one or more rows of the first matrix are representative of the one or more input channels of the first layer, the one or more columns of the second matrix are representative of the one or more output channels of the second layer, and the one or more rows of the second matrix are representative of the one or more input channels of the second layer; or

the one or more rows of the first matrix are representative of the one or more output channels of the first layer, the one or more columns of the first matrix are representative of the one or more input channels of the first layer, the one or more columns of the second matrix are representative of the one or more output channels of the second layer, and the one or more rows of the second matrix are representative of the one or more input channels of the second layer; or

the one or more columns of the first matrix are representative of the one or more output channels of the first layer, the one or more rows of the first matrix are representative of the one or more input channels of the first layer, the one or more rows of the second matrix are representative of the one or more output channels of the second layer, and the one or more columns of the second matrix are representative of the one or more input channels of the second layer.

**14.** A processing system for compressing a neural network, the processing system comprising at least one processor configured to:

receive a neural network;

select two or more adjacent layers of the received neural network, each of said two or more adjacent layers having one or more input channels and one or more output channels, the one or more output channels of a first layer of the two or more adjacent layers corresponding to the one or more input channels of a second, subsequent, layer of the two or more adjacent layers, the first layer being arranged to perform a first operation and the second layer being arranged to perform a second operation;

determine a first matrix representative of a set of coefficients of the first layer of the received neural network, the first matrix comprising a plurality of elements representative of non-zero values and a plurality of elements representative of zero values, the one or more rows or columns of the first matrix being representative of the one or more output channels of the first layer and the one or more other of the rows or columns of the first matrix being representative of the one or more input channels of the first layer;

determine a second matrix representative of a set of coefficients of the second layer of the received neural network, the second matrix comprising a plurality of elements representative of non-zero values and a plurality of elements representative of zero values, the one or more rows or columns of the second matrix being representative of the one or more output channels of the second layer and the one or more other of the rows or columns of the second matrix being representative of the one or more input channels of the second layer;

form an array by, one of:

transposing the first matrix and forming the array comprising the transposed first matrix and the second matrix by aligning the columns or rows of the transposed first matrix that are representative of the one or more output channels of the first layer with the columns or rows of the second matrix that are representative of the one or more input channels of the second layer; or

transposing the second matrix and forming the array comprising the transposed second matrix and the first matrix by aligning the rows or columns of the transposed second matrix that are representative of the one or more input channels of the second layer with the rows or columns of the first matrix that are representative of the one or more output channels of the first layer; or

forming the array comprising the first matrix and the second matrix by aligning the rows or columns of the first matrix that are representative of the one or more output channels of the first layer with the rows or columns of the second matrix that are representative of the one or more input channels of the second layer;

rearrange the rows and/or columns of the array so as to:

gather the plurality of elements representative of non-zero values comprised by the first matrix or the transposed first matrix into a first one or more sub-matrices, the first one or more sub-matrices having a greater number of elements representative of non-zero values per total number of elements of the first one or more sub-matrices than the number of elements representative of non-zero values per total number of elements of the first matrix; and

gather the plurality of elements representative of non-zero values comprised by the second matrix or the transposed second matrix into a second one or more sub-matrices, the second one or more sub-matrices having a greater number of elements representative of non-zero values per total number of elements of the second one or more sub-matrices than the number of elements representative of non-zero values per total number of elements of the second matrix; and

output a compressed neural network comprising a first compressed layer arranged to perform a first compressed operation in dependence on the first one or more sub-matrices and a second, subsequent, compressed layer arranged to perform a second compressed operation in dependence on the second one or more sub-matrices.

**15.** Computer readable code configured to cause the method of any of claims 1 to 13 to be performed when the code is run.

**FIGURE 1**

**FIGURE 2a**

**FIGURE 2b**

FIGURE 3

EP 4 428 757 A1

## FIGURE 4

S502 — Receive a neural network

S504 — Determine a matrix representative of a set of coefficients of a layer of the neural network

S506 — Rearrange the rows and/or columns of the matrix

S508 — Output a compressed neural network

## FIGURE 5

EP 4 428 757 A1

600

710

702-1

702-2

702-3

702-4

**FIGURE 6**

**FIGURE 7**

FIGURE 8

**FIGURE 9**

FIGURE 10

S1102 — Receive a neural network

S1104 — Select two adjacent layers of the neural network

S1106 — Determine a first matrix representative of a set of coefficients of a first layer

S1108 — Determine a second matrix representative of a set of coefficients of a second layer

S1110 — Form an array

S1112 — Rearrange the rows and/or columns of the array

S1114 — Output a compressed neural network

FIGURE 11

EP 4 428 757 A1

**FIGURE 12**

**FIGURE 13**

FIGURE 14

EP 4 428 757 A1

1504-A

1504-B

1504-C

| $W_{1,1}$ | $W_{1,2}$ | $W_{1,3}$ |
|-----------|-----------|-----------|
| $W_{2,1}$ | $W_{2,2}$ | $W_{2,3}$ |
| $W_{3,1}$ | $W_{3,2}$ | $W_{3,3}$ |

$X_1$
$X_2$
$X_3$

$Y_1$
$Y_2$
$Y_3$

1510-A    1504-B

1510-B    1504-C

1510-C    1504-D

**FIGURE 15**

FIGURE 16a

FIGURE 16b

**FIGURE 17**

**FIGURE 18**

| | Europäisches Patentamt / European Patent Office / Office européen des brevets | **EUROPEAN SEARCH REPORT** | Application Number EP 24 15 9928 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Hsu Yun-Jui ET AL: "On Minimizing Diagonal Block-wise Differences for Neural Network Compression", , 24 August 2020 (2020-08-24), pages 485-532, XP055828134, Retrieved from the Internet: URL:https://ecai2020.eu/papers/11_paper.pdf [retrieved on 2021-07-27] * abstract; figures 2(a), 2(b), 2(c) * * section 1, third paragraph * * section 1, line 45 * * section 3, lines 1-7 * * section 4, lines 4-27 * * section 4, line 30 * * section 5 * * section 5.4 * * page 3, column 1, line 9 - line 27 * * page 4, column 1, line 8 - line 11 * * page 4, column 1, line 24 - line 26 * * algorithm 4 * ----- | 1-15 | INV. G06N3/0495 G06N3/0464 G06N3/082 G06F17/16 ADD. G06N3/063 |
| X | DENG CHUNHUA ET AL: "PermDNN: Efficient Compressed DNN Architecture with Permuted Diagonal Matrices", 2018 51ST ANNUAL IEEE/ACM INTERNATIONAL SYMPOSIUM ON MICROARCHITECTURE (MICRO), IEEE, 20 October 2018 (2018-10-20), pages 189-202, XP033473297, DOI: 10.1109/MICRO.2018.00024 [retrieved on 2018-12-12] * abstract; figures 1(b), 2, 8 * * section III-A * * section IV * ----- -/-- | 1-15 | TECHNICAL FIELDS SEARCHED (IPC) G06F G06N |

The present search report has been drawn up for all claims

| Place of search | Date of completion of the search | Examiner |
|---|---|---|
| The Hague | 31 July 2024 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

54

Europäisches
Patentamt

European
Patent Office

Office européen
des brevets

## EUROPEAN SEARCH REPORT

**Application Number**

EP 24 15 9928

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAZAR SUPIC ET AL: "MPDCompress - Matrix Permutation Decomposition Algorithm for Deep Neural Network Compression", ARXIV.ORG, CORNELL UNIVERSITY LIBRARY, 201 OLIN LIBRARY CORNELL UNIVERSITY ITHACA, NY 14853, 30 May 2018 (2018-05-30), XP080883945, * abstract; figures 1, 2, 3 * * section 3 * * algorithm 1 * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 31 July 2024 | Aoun, Marc |

EPO FORM 1503 03.82 (P04C01)

**REFERENCES CITED IN THE DESCRIPTION**

**Patent documents cited in the description**

- GB 2302839 A
- GB 2302840 A
- GB 2401650 A